# EUROPEAN PATENT SPECIFICATION

(11) **EP 2 579 006 B1**
(45) Date of publication and mention of the grant of the patent: **18.07.2018**
(21) Application number: 11789453.5
(22) Date of filing: 31.05.2011
(51) Int. Cl.: G01F 15/075, G08B 21/18, F23K 5/00, F16K 37/00, F23N 5/18, F23N 5/24, G01F 15/00

(54) **GAS SHUT-OFF DEVICE**
GASABSPERRVORRICHTUNG
DISPOSITIF D'ARRÊT DE GAZ

(30) Priority: 03.06.2010 JP 2010127459
(43) Date of publication of application: 10.04.2013
(73) Proprietor: Panasonic Corporation, Kadoma-shi Osaka 571-8501 (JP)
(72) Inventor: KAMIMURA, Takanori, Osaka 540-6207 (JP); YOKOHATA, Mitsuo, Osaka 540-6207 (JP)
(74) Representative: Schwabe - Sandmair - Marx
(86) International application number: PCT/JP2011/003051
(87) International publication number: WO 2011/152040

(56) References cited:
- EP-A1- 2 180 219
- JP-A- 7 190 831
- JP-A- H08 128 913
- JP-A- 2001 033 289
- JP-A- 2001 033 289
- JP-A- 2008 020 187
- JP-A- 2009 139 309
- JP-A- 2009 139 309
- JP-A- 2009 210 377
- JP-A- 2009 210 377
- US-A1- 2004 211 462
- US-A1- 2007 095 400

## Description

### Technical Field

The present invention relates to a gas shutoff device which prevents unjust obtainment of a gas, an unjust usage of the gas which would be caused by a theft of the gas shutoff device, etc..

### Background Art

Conventionally, electricity, gas, tap water, or the like are supplied from utilities, and usage amounts of them are measured by meters installed at users (customers)' home, etc., and managed.

Sealing devices are provided to keep these meters from being opened after installation and to prevent unjust behaviors. The sealing prevents unjust usage of the gas (see, e.g., Patent Literature 1). Hereinafter, its configuration will be described with reference to Figs. 19 and 20.

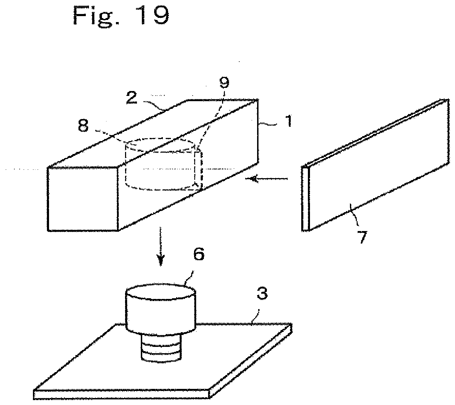

Fig. 19 is a view showing a method of joining a sealing device to a terminal cover. A sealing device 2 includes a sealing screw fitting section 8 into which a sealing screw 6 is inserted to fasten a terminal cover 3 to a rear surface of a meter body, and a dividing groove 9 which allows the sealing device 2 to be divided easily when the sealing screw fitting section 8 is detached from the sealing screw 6. A non-contact IC tag 7 is bonded to a side surface 1 provided with the dividing groove 9, by an adhesive, etc.. In this configuration, the sealing screw 6 is pushed into the sealing screw fitting section 8, and the sealing screw fitting section 8 and the sealing screw 6 are fitted together. In this way, the sealing device 2 seals the meter body.

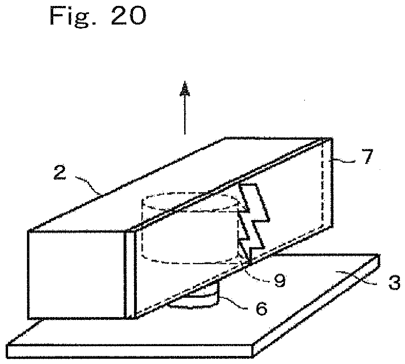

Fig. 20 is a view showing a state in which the sealing device 2 with the non-contact IC tag 7 bonded to the side surface 1 is detached from the terminal cover 3. To detach the sealing device 2 from the terminal cover 3, the sealing device 2 is pulled in a direction of an arrow (upward) in Fig. 20. This pulling force generates a crack in the sealing device 2 from the dividing groove 9, which causes the side surface 1 to be divided. Because of this, the non-contact IC tag 7 bonded to the side surface 1 is also divided.

Once the sealing device 2 is attached to the terminal cover 3, the sealing screw 6 cannot be rotated unless the sealing device 2 and hence the non-contact IC tag 7 are divided. Therefore, by attaching the sealing device 2 to the meter, an interior part of the meter body cannot be opened. In other words, if the sealing device 2 is divided or replaced by another sealing device 2 by opening the meter body, an abnormality can be detected based on a mismatch between identification information transmitted from the non-contact IC tag 7 bonded to the sealing device 2 and identification information stored in the meter body.

In supply of the gas, a gas shutoff device is used together with the above stated meter. The gas shutoff device is configured to shut off the gas if it is determined that a gas pressure value has decreased abnormally, and return to a supply state after the shutoff while ensuring safety (see, e.g., Patent Literature 2). This configuration will be described with reference to Fig. 21.

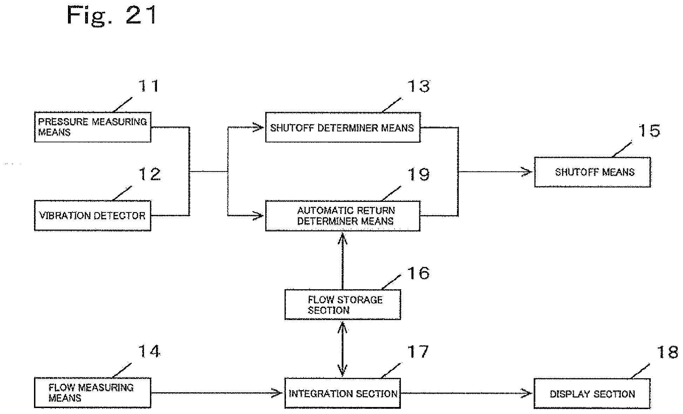

Fig. 21 is a block diagram of a conventional gas shutoff device. The gas shutoff device includes a pressure measuring means 11, a vibration detecting (sensing) device 12, a shutoff determiner means 13, a flow measuring means 14, a shutoff means 15, a flow storage section 16, an integration section 17, a display section 18 and an automatic return determiner means 19. The shutoff determiner means 13, the flow storage section 16, the integration section 17, and the automatic return determiner means 19 are constituted by, for example, microcomputers, respectively. The pressure measuring means 11 detects a gas pressure in a gas supply pipe and supplies a detection signal to the shutoff determiner means 13 and to the automatic return determiner means 19. The vibration detecting device 12 detects a vibration or an impact due to an earthquake or other factor and supplies a detection signal to the shutoff determiner means 13 and to the automatic return determiner means 19. The flow measuring means 14 measures a flow rate of the gas flowing through a gas passage, and supplies the measured flow rate to the integration section 17. The integration section 17 calculates an instantaneous flow rate based on the detection signal from the flow measuring means 14, and integrates the calculated instantaneous flow rate to derive an integrated flow rate. The calculated integrated flow rate is stored in the flow storage section 16 and displayed on the display section 18.

It is supposed that the gas pressure value measured by the pressure measuring means 11 has decreased abnormally, and thereby the gas is shut off. In this case, firstly, the pressure measuring means 11 measures the gas pressure. Then, the automatic return determiner means 19 determines whether or not the gas pressure measured by the pressure measuring means 11 is equal to or higher than the preset gas pressure. If it is determined that the gas pressure measured by the pressure measuring means 11 is equal to or higher than a preset gas pressure, the automatic return determiner means 19 automatically returns the shutoff means 15 to an open state. If the set pressure is not ensured in measurement of the pressure after occurrence of the shutoff, an operator goes to a location where the gas shutoff device is installed and manually performs a return (restoration) work, for example, operating a return switch, thereby returning the shutoff means 15 to the open state.

However, in the prior art which is represented by the sealing device 2, the unjust behavior performed with respect to the meter body can be prevented, but an unjust behavior such as bypassing of a pipe cannot be addressed effectively.

If the unjust behavior such as bypassing of a pipe is performed, the gas pressure has decreased and thereby the gas shutoff device shuts off the gas once. This shutoff is performed to ensure safety. After the return operation is performed after the shutoff, the gas can be used formally thereafter. Because of this, a behavior might be repeated, in which the pipe is returned prior to meter reading and is bypassed after the meter reading to avoid detection that the gas was obtained unjustly. As a result, the conventional gas shutoff device has a problem that a gas leakage might occur as well as the problem that the gas is obtained unjustly.
US-2004/211462 A1 describes a microprocessor-based gas meter which has fully electronic control, safety cutoff and data communication functions, while remains the same size of a conventional gas meter. The control circuit board in the microprocessor-based gas meter is mounted inside the main body of the gas meter through a mounting slot. The sensors, wires and battery are located in the rest space of the chamber so as to utilize the space of the chamber. When an abnormal situation is detected, the control circuit activates a cutoff valve and shuts off the gas intake. The data communication function is to transfer gas-metering data through telephone lines to the gas company so that the mistakes and cost of manual checking and recording can be eliminated.
US-2007/095400 A1 relates to a shut-off valve system. The shut-off valve system operative to shut-off flow through a pipe or other conduit in response to one or more fault conditions, including in particular high current that may cause damage to piping or other components downstream of the shut-off valve. The high current may result from a lightning strike inducing high current flow through the conduit and fluid flow components connected in line with the conduit.

Japanese Patent JP 2001 033289 A shows another example of a fluid shutoff device with shutoff means, control means, pressure measuring means, vibration detecting means and return means.

### Citation Lists

### Patent Literature

Patent Literature 1: Japanese Laid-Open Patent Application Publication No. 2006-250806
Patent Literature 2: Japanese Patent No. 3565552
Patent Literature 3: US-2004/211462 A1
Patent Literature 4: US-2007/095400 A1
Patent Literature 5: Japanese Patent JP 2001 033289 A

### Summary of the Invention

The invention is defined by the subject-matter of the independent claims. The dependent claims are directed to advantageous embodiments.

### Advantages of the Invention

Advantageously, it is provided a fluid shutoff device configured in such a manner that if a vibration due to detaching of a pipe, etc., is detected and a fluid pressure of a gas or the like has decreased to a value which is equal to or less than predetermined pressure value, which cannot occur in a normal state, the fluid is shutoff, and a return operation that follows after the shutoff is inhibited, thereby preventing an unjust behavior.

Advantageously, a fluid shutoff device comprises a shutoff means coupled to a fluid supply pipe and configured to switch from a supply state in which a fluid flows through the fluid supply pipe to a shutoff state in which the fluid is shutoff; a control means for controlling at least the shutoff means; a flow measuring means for measuring a flow rate of the fluid; a pressure measuring means for measuring a pressure of the fluid; a vibration detecting means for detecting a vibration; and a return means for returning the shutoff means from the shutoff state to the supply state; wherein when the vibration detecting means has detected the vibration within a preset predetermined time, and it has been detected that the pressure of the fluid measured by the pressure measuring means has decreased to a value equal to or less than a predetermined pressure value within a preset predetermined time, the control means causes the shutoff means to switch to the shutoff state and disenables the return means to return the shutoff means to the supply state.

Advantageously, it is provided a computer program for causing a computer to execute a control method of the control means included in the fluid shutoff device, and a computer-readable storage medium containing the computer program.

The above and further features and advantages of the invention will more fully be apparent from the following detailed description with reference to the accompanying drawings.

As described above, in the present invention, it is possible to provide a fluid shutoff device, in which if a vibration due to detaching of a pipe or the like is detected, and a fluid pressure of a gas or the like has decreased to a value equal to or less than a predetermined value which cannot occur in a normal state, the fluid is shutoff, and a return operation that follows is inhibited, thereby preventing unjust behaviors.

### Brief Description of the Drawings

[Fig. 1] Fig. 1 is a block diagram showing an exemplary configuration of a gas shutoff device according to Embodiment 1 (and Embodiments 2 to 4 and 7) of the present invention.
[Fig. 2] Fig. 2 is a flowchart showing one example of control performed by a control means when the gas shutoff device of Fig. 1 is installed.
[Fig. 3] Fig. 3 is a block diagram showing a state in which unjust construction has been performed, in which the gas shutoff device of Fig. 1 is attached with a bypass pipe.
[Fig. 4] Fig. 4 is a flowchart showing one example of control performed by the control means when the unjust construction of Fig. 3 is performed.
[Fig. 5] Fig. 5 is a flowchart showing one example of control performed by the control means when the gas shutoff device of Fig. 1 returns to a supply state.
[Fig. 6] Fig. 6 is a flowchart showing one example of control performed by the control means when unjust construction is performed, in a gas shutoff device according to Embodiment 2 of the present invention.
[Fig. 7] Fig. 7 is a flowchart showing one example of control performed by the control means when unjust construction is performed, in a gas shutoff device according to Embodiment 3 of the present invention.
[Fig. 8] Fig. 8 is a flowchart showing one example of control performed by the control means when unjust construction is performed, in a gas shutoff device according to Embodiment 4 of the present invention.
[Fig. 9] Fig. 9 is a block diagram showing an exemplary configuration of a gas shutoff device 30 according to Embodiment 5 (and Embodiments 6 and 8) of the present invention.
[Fig. 10] Fig. 10 is a flowchart showing one example of control performed by the control means when the gas shutoff device of Fig. 9 is installed.
[Fig. 11] Fig. 11 is a flowchart showing one example of control performed by the control means when a gas shutoff device according to Embodiment 6 of the present invention is installed.
[Fig. 12] Fig. 12 is a flowchart showing one example of control performed by the control means when a gas shutoff device according to Embodiment 7 of the present invention returns to a supply state.
[Fig. 13] Fig. 13 is a flowchart showing one example of control performed by a control means when a gas shutoff device according to Embodiment 8 of the present invention returns to a supply state.
[Fig. 14] Fig. 14 is a flowchart showing one example of a process for permitting a monitoring function shutoff to be deactivated in the gas shutoff device, which is associated with control performed when the gas shutoff device returns to the supply state as shown in Fig. 13.
[Fig. 15] Fig. 15 is a block diagram showing an exemplary configuration of a gas shutoff device according to Embodiment 9 of the present invention.
[Fig. 16] Fig. 16 is a flowchart showing one example of control performed by a control means when the gas shutoff device of Fig. 15 is installed.
[Fig. 17] Fig. 17 is a flowchart showing one example of control performed by a control means when a gas shutoff device according to Embodiment 10 of the present invention returns to a supply state.
[Fig. 18] Fig. 18 is a flowchart showing one example of a process for permitting monitoring function shutoff to deactivated, in a control means of a gas shutoff device according to Embodiment 11 of the present invention.
[Fig. 19] Fig. 19 is a schematic exploded view showing a method of joining a conventional sealing device to a terminal cover.
[Fig. 20] Fig. 20 is a schematic perspective view showing a state in which the conventional sealing device is detached from the terminal cover.
[Fig. 21] Fig. 21 is a block diagram showing an exemplary configuration of the conventional gas shutoff device.

### Description of the Invention

According to the present invention, a fluid shutoff device comprises a shutoff means coupled to a fluid supply pipe and configured to switch from a supply state in which a fluid flows through the fluid supply pipe to a shutoff state in which the fluid is shutoff; a control means for controlling at least the shutoff means; a flow measuring means for measuring a flow rate of the fluid; a pressure measuring means for measuring a pressure of the fluid; a vibration detecting means for detecting a vibration; and a return means for returning the shutoff means from the shutoff state to the supply state; wherein when the vibration detecting means has detected the vibration within a preset predetermined time, and it has been detected that the pressure of the fluid measured by the pressure measuring means has decreased to a value equal to or less than a predetermined pressure value within a preset predetermined time, the control means causes the shutoff means to switch to the shutoff state and disenables the return means to return the shutoff means to the supply state, when the pressure measuring means has detected a decrease in the fluid pressure, then the vibration detecting means has detected the vibration within a first predetermined time, and then the pressure measuring means has detected that the fluid pressure has been restored to a level before the decrease of the fluid pressure within a second predetermined time, the control means causes the shutoff means to switch to the shutoff state and disenables the return means to return the shutoff means to the supply state; or when the vibration detecting means has detected the vibration, then the pressure measuring means has detected a decrease in the fluid pressure within a first predetermined time, then the vibration detecting means has detected the vibration, and then the pressure measuring means has detected that the fluid pressure has been restored to a level before the decrease of the fluid pressure within a second predetermined time, the control means causes the shutoff means to switch to the shutoff state and disenables the return means to return the shutoff means to the supply state.

In the fluid shutoff, when a predetermined operation has been performed with respect to the fluid shutoff device when the fluid shutoff device is installed, then the vibration detecting means has detected the vibration, and then the pressure measuring means has detected a decrease in the fluid pressure within a predetermined time, the control means may cause the shutoff means to switch to the shutoff state and disenable the return means to return the shutoff means to the supply state.

In the fluid shutoff device, when the pressure measuring means has detected a decrease in the fluid pressure, and then the vibration detecting means has detected the vibration within the predetermined time, the control means may cause the shutoff means to switch to the shutoff state and disenable the return means to return the shutoff means to the supply state.

In the fluid shutoff device, when the pressure measuring means has detected a decrease in the fluid pressure, then the vibration detecting means has detected the vibration within a first predetermined time, and then the pressure measuring means has detected that the fluid pressure has been restored to a level before the decrease of the fluid pressure within a second predetermined time, the control means may cause the shutoff means to switch to the shutoff state and disenables the return means to return the shutoff means to the supply state.

The fluid shutoff device may further comprises an outside communication means capable of communication with outside; wherein the control means may cause the outside communication means to communicate to outside, at a timing of at least one of a time point after the shutoff means has been switched to the shutoff state, and a time point when a predetermined operation has been performed with respect to the fluid shutoff device when the fluid shutoff device is installed.

In the fluid shutoff device, the control means may cause the outside communication means to communicate to outside information indicating that installation of the fluid shutoff device is completed when the predetermined operation has been performed with respect to the fluid shutoff device when the fluid shutoff device is installed.

In the fluid shutoff device, the control means may cause the outside communication means to communicate to outside information indicating that a gas is shut off, after the shutoff means has been switched to the shutoff state.

In the fluid shutoff device, when a predetermined operation has been performed with respect to the fluid shutoff device after the shutoff means has been switched to the shutoff state, the control means may cause the outside communication means to transmit a response request to outside, and permit the shutoff means to be returned to the supply state upon reception of the response from outside.

In the fluid shutoff device, when a predetermined operation has been performed with respect to the fluid shutoff device after the shutoff means has been switched to the shutoff state, the control means may permit the shutoff means to be returned to the supply state.

The fluid shutoff device may further comprise a card processing means which writes and reads information to and from a card-type storage medium in a state in which the card-type storage medium is inserted into the card processing means; and after the card-type storage medium is inserted into the card processing means and information is read from the card-type storage medium when the fluid shutoff device is installed, the control means may activate causing of the shutoff means to switch to the shutoff state and disenabling of the return means to return the shutoff means to the supply state.

In the fluid shutoff device, when the card-type storage medium is inserted into the card processing means and information is read from the card-type storage medium after the shutoff means has been switched to the shutoff state, the control means may enable the return means to return the shutoff means to the supply state.

The fluid shutoff device may further comprise an outside communication means capable of communication with outside; when the card-type storage medium is inserted into the card processing means and information is read from the card-type storage medium after the shutoff means has been switched to the shutoff state, the control means causes the outside communication means to transmit a response request to outside, and permits the shutoff. means to be returned to the supply state upon reception of the response from outside.

According to the present invention, there is provided computer program for causing a computer to execute a control method of the control means included in the fluid shutoff device and a computer-readable storage medium containing the computer program.

The above stated features are main components for achieving the object of the present invention. Hereinafter, preferred embodiments corresponding these features will be described with reference to the drawings. Note that the present invention is not limited to the embodiments described below, but limited only by the appended claims. In addition, throughout the drawings, the same or corresponding components in the embodiments below are identified by the same reference symbols and will not be described in repetition.

### (Embodiment 1)

### [Configuration of gas shutoff device]

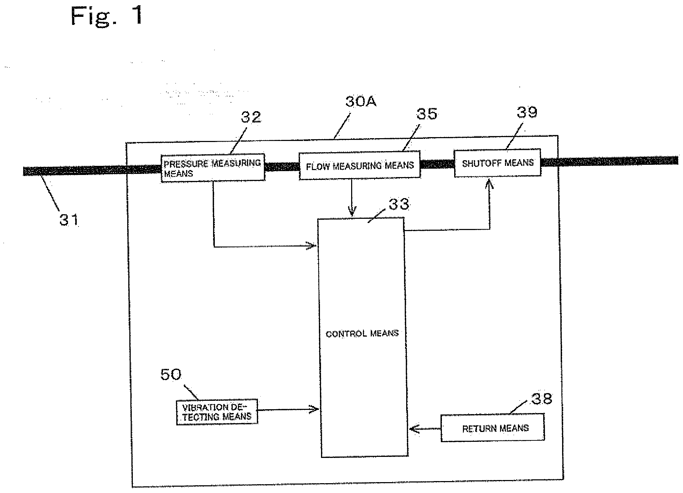

Fig. 1 is a block diagram showing an exemplary configuration of a gas shutoff device according to Embodiment 1 of the present invention.

As shown in Fig. 1, a gas shutoff device 30A of the present embodiment is provided at a portion of a gas supply pipe 31. One or more gas instrument(s) installed in each customer home is/are coupled to a downstream portion of the pipe. The gas shutoff device 30A can be used together with a known gas meter, or the like (not shown).

The gas shutoff device 30A includes a pressure measuring means 32, a control means 33, a flow measuring means 35, a return means 38, a shutoff means 39, and a vibration detecting (sensing) means 50. The pressure measuring means 32, the flow measuring means 35, and the shutoff means 39 are coupled to the gas supply pipe 31 in this order.

The pressure measuring means 32 is coupled to a portion of the gas supply pipe 31 as described above, and measures a gas pressure in the gas supply pipe 31. As the pressure measuring means 32, a known pressure measuring device can be suitably used, and its specific configuration is not limited particularly. The pressure measuring means 32 inputs the measured gas pressure to the control means 33. The control means 33 executes control by utilizing the gas pressure.

In the present embodiment, the control means 33 performs control of the overall gas shutoff device 30A. Specifically, the control means 33 is configured to control the operation of the respective means within the gas shutoff device 30A, and to perform securing processes such as an alarm sound emitting process, and a shutoff process. The control means 33 may be configured to control at least the shutoff means 39. A specific configuration of the control means 33 is not particularly limited, but may be have a known configuration including a microcomputer and a peripheral circuit thereof. In the case of the control means 33 which is the microcomputer, or the like, its control function is performed in such a manner that a predetermined operation program is prestored in a storage means built into the microcomputer or connected to outside, and is executed by the microcomputer to perform the corresponding processing.

As will be described later, the control means 33 performs predetermined control with respect to the shutoff means 39, when the vibration detecting means 50 has detected a vibration and a fluid pressure measured by the pressure measuring means 32 has decreased to a value which is equal to or less than a predetermined pressure value, within a preset predetermined time. The predetermined time may be measured by, for example, a known time measuring means included in the microcomputer and its peripheral circuit. A length of the predetermined time is not particularly limited, and may be set suitably depending on a specific configuration of the gas shutoff device 30A or an environment in which the gas shutoff device 30A is used.

The flow measuring means 35 is connected to a portion of the gas supply pipe 31 and measures a flow rate of the gas within the gas supply pipe 31. As the flow measuring means 35, a known flow measuring device may be suitably used, and its specific configuration is not particularly limited. The flow measuring means 35 inputs the measured gas flow rate to the control means 33. The control means 33 performs control by utilizing the gas flow rate.

The return means 38 serves to return the gas shut off by the shutoff means 39. The return means 38 is typically comprised of a known switch. When the switch is operated, a return signal is input to the control means 33. The control means 33 outputs a return command signal to the shutoff means 39 in response to the return signal input from the return means 38, in a state in which the shutoff means 39 is in a shutoff state as will be described later. Thereby, the shutoff means 39 is switched from the shutoff state to a supply state. As the return means 38, a known operation device other than the switch may be suitably used, and its specific configuration is not particularly limited.

The shutoff means 39 is coupled to a portion of the gas supply pipe 31, and is configured to close the gas supply pipe 31 to shut off the gas, in accordance with a command (command signal input) from the control means 33. As the shutoff means 39, a known shutoff valve device or the like which can shut off the passage of the gas supply pipe 31 may be suitably used, and its specific configuration is not particularly limited. The shutoff means 39 is capable of switching between "supply state" in which the gas is supplied to a gas instrument (not shown) through the passage of the gas supply pipe 31 and "shutoff state" in which the passage of the gas supply pipe 31 is closed and the gas is not supplied to the gas instrument (not shown) through the passage of the gas supply pipe 31. Normally, the shutoff means 39 is in the supply state, and is switched to the shutoff state in response to the shutoff command signal output from the control means 33.

When the above stated return means 38 is operated, the shutoff means 39 is switched from the shutoff state to the supply state by control (output of a return command signal) performed by the control means 33. The fact that the shutoff means 39 is switched from the shutoff state to the supply state by an operation of the return means 38 is expressed as "return to the supply state" in the present embodiment. Also, the supply state returned from the shutoff state may be referred to as "return state" for easier description.

The vibration detecting means 50 detects a vibration of the gas shutoff device 30A and outputs a detection signal to the control means 33. As the vibration detecting means 50, a known vibration detector such as seismoscope or an acceleration sensor is suitably used, and its specific configuration is not particularly limited. When a signal is generated in the gas shutoff device 30A, the vibration detecting means 50 detects its vibration and inputs a detection signal to the control means 33. Based on the detection signal received, the control means 33 performs predetermined control.

In the present invention, the control means 33 determines that the shutoff means 39 is inhibited from being returned from the shutoff state to the supply state, when the vibration detecting means 50 has detected a vibration and the fluid pressure measured by the pressure measuring means 32 has decreased to a value equal to or less than a predetermined pressure value. If at least the vibration and the fluid pressure decrease are detected, within a preset predetermined time, the control means 33 performs control so that the shutoff means 39 is switched to the shutoff state and the return means 38 is disenabled to return the shutoff means 39 to the supply state (the shutoff means 39 is inhibited from being returned to the supply state in response to the return means 38's operation). In particular, in the present embodiment, if the vibration detecting means 50 detects the vibration after the predetermined operation has been performed with respect to the gas shutoff device 30A in installation of the gas shutoff device 30A, and thereafter the pressure measuring means 32 detects the gas pressure decrease within the predetermined time, the control means 33 performs control so that the shutoff means 39 is switched to the shutoff state and the return means 38 is disenabled to return the shutoff means 39 to the supply state.

The gas shutoff device 30A of the present embodiment may include components in addition to the pressure measuring means 32, the control means 33, the flow measuring means 35, the return means 38, the shutoff means 39, and the vibration detecting means 50, of course. These components can be expressed as functional units in the gas shutoff device 30A. Therefore, in the present embodiment, for example, the pressure measuring means 32 may be read as a pressure measuring section, the control means 33 may be read as a control section or a controller, the flow measuring means 35 may be read as a flow measuring section, the return means 38 may be read as a return section, the shutoff means 39 may be read as a shutoff section, and the vibration detecting means 50 may be read as a vibration detecting section or seismoscope.

### [Control for gas shutoff device]

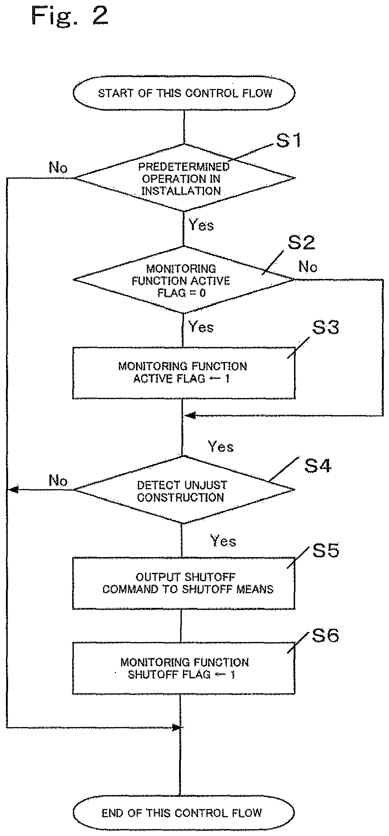

Regarding the gas shutoff device 30A configured as described above, control performed when the gas shutoff device 30A is installed, control performed when unjust construction has been performed, and control performed when the shutoff means 39 is returned from the shutoff state to the supply state, will be described specifically with reference to Figs. 2 to 5.

Fig. 2 is a flowchart showing one example of control performed by the control means 33 when the gas shutoff device 30A according to the present embodiment is installed.

As shown in Fig. 2, initially, the control means 33 determines whether or not a predetermined operation in installation has been performed with respect to the gas shutoff device 30Aby utility operator (s), etc. (step S1). The predetermined operation may be an operation (manipulation) which can be executed only a person (typically, utility operator) who installs the gas shutoff device 30A. The predetermined operation may be, for example, pressing the return means 38 plural times at predetermined time intervals.

If it is determined that the predetermined operation has not been performed with respect to the gas shutoff device 30A (No in step S1), the control means 33 terminates the control in the installation of the gas shutoff device 30A. On the other hand, if it is determined that the predetermined operation has been performed with respect to the gas shutoff device 30A (Yes in step S1), the control means 33 determines whether or not a monitoring function active flag is 0 (step S2). The monitoring function is defined as a function for monitoring whether or not the gas has been obtained unjustly, based on the gas pressure value. If it is determined that the monitoring function active flag is not 0 (No in step S2), the process goes to unjust construction detecting step (step S4). On the other hand, if it is determined that the monitoring function active flag is not 0 (Yes in step S2), the monitoring function is not activated, and therefore the control means 33 sets the monitoring function active flag to 1, to activate the monitoring function (step S3).

In the unjust construction detecting step (step S4), the control means 33 determines whether or not the unjust construction has been performed. This step will be described in detail later. If it is determined that the unjust construction has been performed (Yes in step S4), the control means 33 outputs a shutoff command signal to the shutoff means 39 (step S5). In response to the shutoff command signal, the shutoff means 39 closes the gas supply pipe 31 (switches from the supply state to the shutoff state). Thereafter, the control means 33 sets a monitoring function shutoff flag to 1 (step S6), and terminates a series of control process. The monitoring function shutoff (shutoff provided by the monitoring function) indicates that after the vibration detecting means 50 detects the vibration, a gas pressure value measured by the pressure measuring means 32 has decreased to a value equal to or less than a predetermined pressure value, within a predetermined time, and thereby the gas has been shutoff.

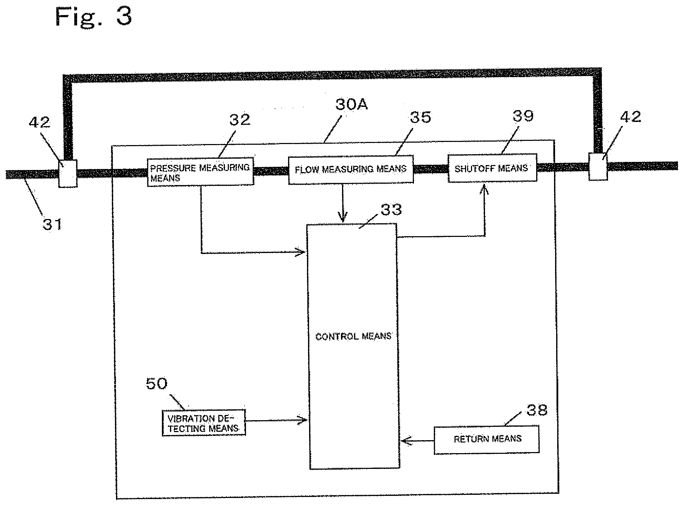

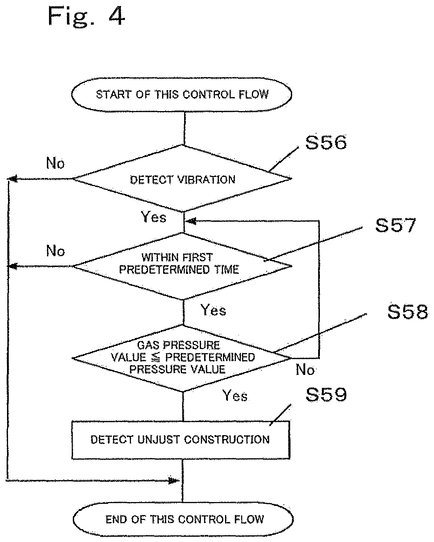

Next, the control performed in the unjust construction detecting step will be described. Fig. 3 is a block diagram showing a state in which unjust construction has been performed, in which the gas shutoff device 30A of the present embodiment is attached with a bypass pipe 42. Fig. 4 is a flow chart showing one example of control performed by the control means 33 when the unjust construction is performed.

As shown in Fig. 3, end portions of the bypass pipe 42 are attached to the gas supply pipe 31 at forward and rearward sides of the gas shutoff device 30A. As a result of this, the supplied gas flows through the bypass pipe 42 as well as the gas supply pipe 31. As a result, the flow rate of the gas flowing to the flow measuring means 35 is less than a flow rate of actual usage amount, and thus, it can be found out that the gas can be obtained unjustly.

When the gas shutoff device 30A is installed, inspection or the like of a pipe is performed. Normally, the bypass pipe 42 is not attached to the gas supply pipe 31 in the installation, and is attached to the gas supply pipe 31 after the installation (bypass work). To carry out the bypass work, the gas shutoff device 30A must be detached from the gas supply pipe 31. The vibration detecting means 50 of the gas shutoff device 30A detects the vibration generated by detaching the gas shutoff device 30A from the gas supply pipe 31.

Accordingly, as shown in Fig. 4, the control means 33 determines whether or not the vibration detecting means 50 has detected the vibration (step S56). If it is determined that the vibration detecting means 50 has not detected the vibration (No in step S56), the control means 33 terminates this control. If it is determined that the vibration detecting means 50 has detected the vibration (Yes in step S56), the control means 33 determines whether or not a time is within a first predetermined time (step S57). If it is determined that the time is within the first predetermined time (Yes in step S57), the control means 33 determines whether or not a gas pressure value measured by the pressure measuring means 32 has decreased to a value equal to or less than a predetermined value (reference value) (gas pressure value ≦ predetermined pressure value) (step S58).

The predetermined pressure value is not particularly limited, but may be a reference value with which it can be detected that the gas pressure has decreased due to attaching of the bypass pipe 42. For example, the predetermined pressure value may be a value which is derived by adding a predetermined pressure to an average atmospheric pressure, and is sufficiently lower than a value of a normal pressure fluctuation. This is because the gas pressure value measured by the pressure measuring means 32 becomes substantially equal to the atmospheric pressure, if the gas shutoff device 30A is detached from the gas supply pipe 31. The first predetermined time is not particularly limited, and may be suitably set to a time having a length which falls into a period of time that passes from when the gas shutoff device 30A has been detached from the gas supply pipe 31 until the gas shutoff device 30A is attached again to the gas supply pipe 31.

If it is detected that that the gas pressure has decreased within the first predetermined time (Yes in step S58) after the vibration has been detected, the control means 33 determines that the gas shutoff device 30A has been detached from the gas supply pipe 31, and therefore, detects that the unjust construction has been performed (step S59). Thus, the control means 33 terminates the series of control processes. On the other hand, if it is detected that that the gas pressure has not decreased within the first predetermined time (No in step S58), the control means 33 repeats determination as to whether or not a time is within the first predetermined time (return to step S57). When the vibration detecting means 50 has detected the vibration (step S56), then the time has passed the first predetermined time (No in step 56), and the gas pressure value measured by the pressure measuring means 32 is greater than the predetermined value (No in step S58), the control means 33 determines that the unjust construction has not been performed, and terminates the series of control processes.

As described above, in the present embodiment, in installation of the gas shutoff device 30A, the control means 33 performs the above described control to determine whether or not the gas shutoff device 30A has been detached from the gas supply pipe 31. Thus, it can be detected whether or not the unjust construction has been performed.

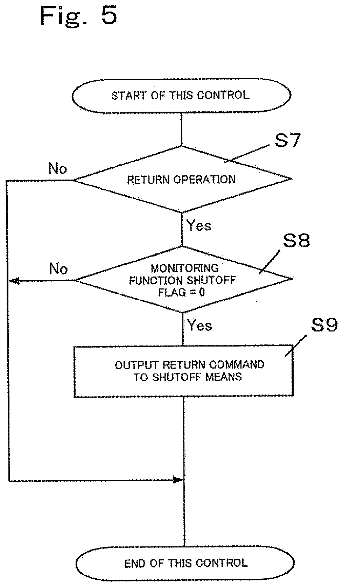

If the shutoff means 39 is in the shutoff state when the unjust construction has not been detected, the control means 33 causes the shutoff means 39 to be returned to the supply state in response to the operation of the return means 38. Fig. 5 is a flowchart showing one example of control performed by the control means 33 when the gas shutoff device 30A of the present embodiment is returned to the supply state.

As shown in Fig. 3, the control means 33 determines whether or not the return means 38 has been operated to input a return signal, i.e., a return operation has been performed with respect to the return means 38 (step S7). If it is determined that the return operation has not been performed (No in step S7), the control means 33 terminates this control. On the other hand, if it is determined that the return operation has been performed (Yes in step S7), the control means 33 determines whether or not the monitoring function shutoff flag is 0 (step S8).

As described above, the monitoring function shutoff indicates that after the vibration detecting means 50 has detected the vibration, the gas pressure value measured by the pressure measuring means 32 has decreased to a value equal to or less than the predetermined value, within the predetermined time (first predetermined time), and then the gas is shut off. Therefore, if it is determined that the monitoring function shutoff flag is 0 (Yes in step S8), the unjust construction has not been detected. Therefore, the control means 33 outputs a return command signal to the shutoff means 39 (step S9). In response to this return command signal, the shutoff means 39 returns the gas supply pipe 31 to the supply state (return from the shutoff state to the return state).

On the other hand, if it is determined that the monitoring function shutoff flag is not 0, i.e., 1 (No in step S8), the unjust construction has been detected, and the shutoff means 39 is in the shutoff state. Therefore, the control means 33 terminates the series of control processes. This disenables the return means 38 to return the shutoff means 39 from the shutoff state to the supply state (the shutoff means 39 is inhibited from being returned to the supply state).

As described above, in the present embodiment, if the shutoff state occurs due to the bypass work of the pipe, etc., after the utility operator has confirmed that the gas shutoff device 30A including the pipe is in a normal state, in inspection or the like when the gas shutoff device 30A is installed, the control means 33 of the gas shutoff device 30A inhibits the shutoff means 39 from being returned to the supply state. This makes it possible to find out the unjust construction of the bypass work in at least meter reading. Therefore, it is possible to prevent unjust obtainment of the gas, or unjust usage of the gas, which would be caused by a theft of the gas shutoff device 30A, etc.. As a result, security can be further improved.

### (Embodiment 2)

A gas shutoff device according to Embodiment 2 of the present invention has fundamentally the same configuration as that of the gas shutoff device 30A of Embodiment 1, except for control in the unjust construction detecting step. The gas shutoff device 30A of the present embodiment is similar to the gas shutoff device of Embodiment 1 in that the operation programs of processing flows (control in the installation and control in the return) of Figs. 2 and 5 are stored, but an operation program in unjust construction detecting step in Embodiment 2 is different from the operation of the processing flow of Fig. 4 described in Embodiment 1.

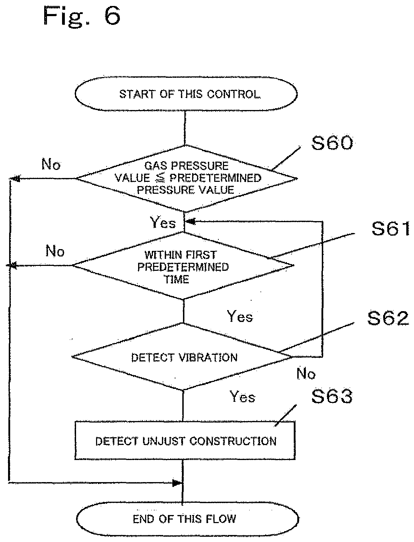

Fig. 6 is a flowchart showing one example of control performed by the control means 33 when unjust construction is performed, in the gas shutoff device 30A according to Embodiment 2 of the present invention.

As described above, in the bypass work which is one unjust construction, the gas shutoff device 30A must be detached from the gas supply pipe 31. When the gas shutoff device 30A is detached, the gas pressure value measured by the pressure measuring means 32 becomes substantially equal to the atmospheric pressure.

As shown in Fig. 6, the control means 33 compares a gas pressure value measured by the pressure measuring means 32 to a predetermined pressure value (reference value) and determines whether or not the measured gas pressure value is equal to or less than the predetermined pressure value (step S60). If it is determined that the gas pressure value is greater than the predetermined pressure value (No in step S60), the control means 33 terminates this control. If it is determined that the gas pressure value is equal to or less than the predetermined pressure value (Yes in step S60), the control means 33 determines whether or not a time is within a first predetermined time (step S61). If it is determined that the time is within the first predetermined time (Yes in step S61), the control means 33 determines whether or not the vibration detecting means 50 has detected a vibration (step S62).

If it is determined that the vibration has been detected within the first predetermined time (Yes in step S62) after the gas pressure decrease has been detected, the control means 33 determines that the gas shutoff device 30A has been detached from the gas supply pipe 31 and detects that the unjust construction has been performed (step S63). Thus, the control means 33 terminates the series of control processes. On the other hand, if it is determined that the vibration has not been detected within the first predetermined time (No in step S62), the control means 33 determines repetitively whether or not the time is within the first predetermined time (process returns to step S61). When the pressure measuring means 32 has detected the gas pressure decrease (step S60), then the first predetermined time has passed (No in step S61), and the vibration detecting means 50 has not detected the vibration (No in step S62), the control means 33 determines that the unjust construction has not been performed (No in step S62). Thus, the control means 33 terminates the series of control processes.

As described above, in the present embodiment, like Embodiment 1, if the vibration (detected by the vibration detecting means 50) and the fluid pressure decrease (detected by the pressure measuring means 32) are at least detected within the preset predetermined time, the control means 33 causes the shutoff means 39 to switch from the supply state to the shutoff state, and disenables the return means 38 to return the shutoff means 39 to the supply state. In particular, in the present embodiment, if the pressure measuring means 32 has detected the gas pressure decrease, and then the vibration detecting means 50 has detected the vibration within the predetermined time, the control means 33 causes the shutoff means 39 to switch to the shutoff state and disenables the return means 38 to return the shutoff means 39 to the supply state.

Thereby, it can be determined that the gas shutoff device 30A has been detached from the gas supply pipe 31, and it can be detected that the unjust construction has been performed. Because of this, in the present embodiment, in the case where the shutoff due to the bypass work or the like of the pipe occurs after the utility operator confirmed that the gas shutoff device 30A including the pipe is normal, in inspection performed when the gas shutoff device 30A is installed, the gas shutoff device 30A is inhibited from returning to the supply state. This makes it possible to find the unjust construction in at least meter reading. Therefore, it is possible to prevent unjust obtainment of the gas, or unjust usage of the gas, which would be caused by a theft of the gas shutoff device 30A, etc.. As a result, security can be further improved.

### (Embodiment 3)

A gas shutoff device according to Embodiment 3 of the present invention has fundamentally the same configuration as those of the gas shutoff devices 30A of Embodiment 1 and Embodiment 2, except for control in the unjust construction detecting step. That is, the gas shutoff device 30A of the present embodiment is similar to the gas shutoff device of Embodiment 1 in that the operation programs of processing flows (control in the installation and control in the return) of Figs. 2 and 5 are stored, but an operation program in unjust construction detecting step in Embodiment 3 is different from the operation program of the processing flow of Fig. 4 described in Embodiment 1 or the operation program of the processing flow of Fig. 6 described in Embodiment 2.

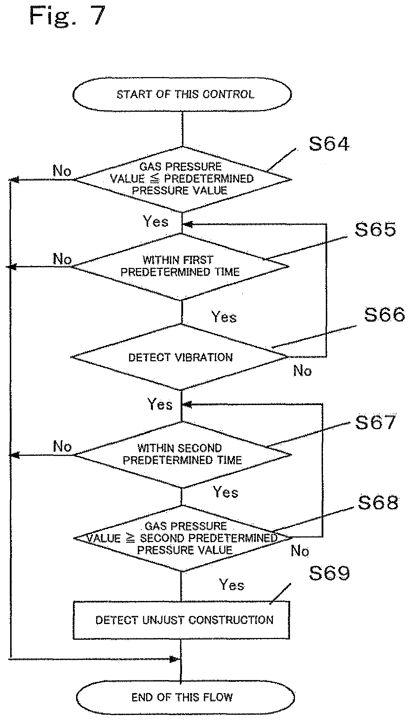

Fig. 7 is a flowchart showing one example of control performed by the control means 33 when unjust construction is performed, in the gas shutoff device 30A according to Embodiment 3 of the present invention.

As described above, in the bypass work which is one unjust construction, the gas shutoff device 30A must be detached from the gas supply pipe 31. When the gas shutoff device 30A is detached, the gas pressure value measured by the pressure measuring means 32 becomes substantially equal to the atmospheric pressure.

As shown in Fig. 7, the control means 33 compares the gas pressure value measured by the pressure measuring means 32 to a predetermined pressure value (first reference value) and determines whether or not the measured gas pressure value is equal to or less than the predetermined pressure value (step S64). In Embodiment 3, the predetermined pressure value may be equal to the predetermined pressure value in Embodiment 1 or Embodiment 2. If it is determined that the gas pressure value is greater than the predetermined pressure value (No in step S64), the control means 33 terminates this control. If it is determined that the gas pressure value is equal to or less than the predetermined pressure value (Yes in step S64), the control means 33 determines whether or not a time is within a first predetermined time (step S65). If it is determined that the time is within the first predetermined time (Yes in step S66), the control means 33 determines whether or not the vibration detecting means 50 has detected a vibration (step S66).

If it is determined that the vibration has been detected within the first predetermined time (Yes in step S66) after the gas pressure decrease has been detected, the control means 33 further determines whether or not a time is within a second predetermined time (step S67). If it is determined that the time is within the second predetermined time (Yes in step S67), the control means 33 compares the gas pressure value measured by the pressure measuring means 32 to a second predetermined pressure value (second reference value), to determine whether or not the measured gas pressure value is equal to or greater than the second predetermined pressure value (step S68).

The second predetermined pressure value is defined as a numeric value with which it can be determined that the gas pressure value having decreased to a value less than the predetermined pressure value (first reference value) has been restored to a level before the decrease, and may be, for example, a value which substantially corresponds to a preset gas supply amount. The second predetermined time is not particularly limited, and may be set to a time having a suitable length within a time that passes from when the gas shutoff device 30A is attached again to the gas supply pipe 31 after the gas shutoff device 30A has been detached from the gas supply pipe 31 until the decreased gas pressure value has been restored to the level before the decrease.

If it is detected that the gas pressure value is equal to or greater than the second predetermined pressure value (Yes in step S68), this means that the gas pressure value measured by the pressure measuring means 32 has decreased once and then has been restored to the level before the decrease. From this, it can be found out that a gas pressure is applied again to the gas whose gas pressure has decreased once. Because of this, the control means 33 determines that the gas shutoff device 30A has been attached again to the gas supply pipe 31 after it was detached therefrom, and detects that the unjust construction has been performed (step S63). Thus, the control means 33 terminates the series of control processes.

If it is detected that the gas pressure value is less than the second predetermined pressure value within the second predetermined time (No in step S68), the control means 33 determines repetitively whether or not a time is within the second predetermined value (process returns to step S67). When the pressure measuring means 32 has detected the gas pressure decrease (step S65), the vibration detecting means 50 has detected the vibration (Yes in step S66), then the second predetermined time has passed (No in step S67), and restoration of the gas pressure has not been detected (No in step S68), the control means 33 determines that the unjust construction has not been performed, and terminates the series of control processes.

As described above, in the present embodiment, like Embodiment 1, the vibration (detected by the vibration detecting means 50) and the fluid pressure decrease (detected by the pressure measuring means 32) are at least detected within the preset predetermined time, the control means 33 causes the shutoff means 39 to switch to the shutoff state, and disenables the return means 38 to return the shutoff means 39 to the supply state. In particular, in the present embodiment, if the pressure measuring means 32 detects the gas pressure decrease, then the vibration detecting means 50 detects the vibration within the first predetermined time, and then the pressure measuring means 32 detects that the gas pressure has been restored to the level before the decrease within the second predetermined time, the control means 33 causes the shutoff means 39 to switch to the shutoff state and disenables the return means 38 to return the shutoff means 39 to the supply state.

Thereby, it can be determined that the gas shutoff device 30A has been attached again to the gas supply pipe 31 so that supply of the gas is enabled after it was detached from the gas supply pipe 31, and it can be detected more surely that the unjust construction has been performed. Because of this, in the present embodiment, if shutoff occurs due to the bypass work or the like of the pipe after the utility operator confirmed that the gas shutoff device 30A including the pipe is normal, in inspection performed when the gas shutoff device 30A is installed, the gas shutoff device 30A is inhibited from returning to the supply state. This makes it possible to find out the unjust construction in at least meter reading. Therefore, it is possible to prevent unjust obtainment of the gas, or unjust usage of the gas, which would be caused by a theft of the gas shutoff device 30A, etc.. As a result, security can be further improved.

### (Embodiment 4)

A gas shutoff device according to Embodiment 4 of the present invention has fundamentally the same configuration as those of the gas shutoff devices 30A of Embodiment 1 to Embodiment 3, except for control in the unjust construction detecting step. That is, the gas shutoff device 30A of the present embodiment is similar to the gas shutoff device of Embodiment 1 in that the operation programs of processing flows (control in the installation and control in the return) of Figs. 2 and 5 are stored, but an operation program in unjust construction detecting step in Embodiment 4 is different from the operation program of the processing flow of Fig. 4 described in Embodiment 1, the operation program of the processing flow of Fig. 6 described in Embodiment 2, or the operation program of the processing flow of Fig. 7 described in Embodiment 3.

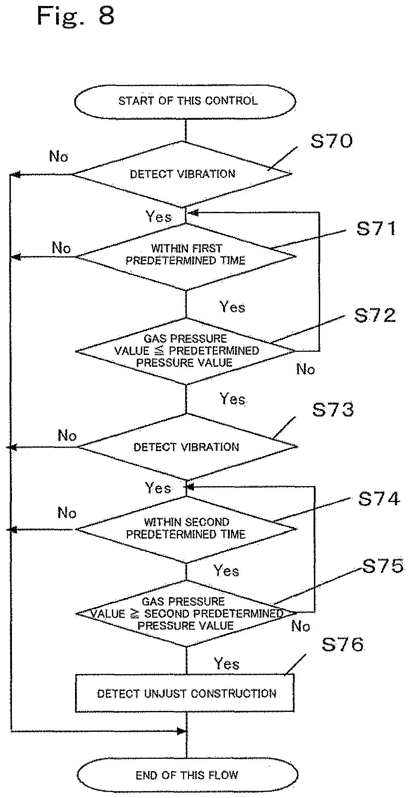

Fig. 8 is a flowchart showing one example of control performed by the control means 33 when unjust construction is performed, in the gas shutoff device 30A according to Embodiment 4 of the present invention.

As described above, in the bypass work which is one unjust construction, the gas shutoff device 30A must be detached from the gas supply pipe 31. When the gas shutoff device 30A is detached, the vibration detecting means 50 of the gas shutoff device 30A detects a vibration. Accordingly, as shown in Fig. 8, the control means 33 determines whether or not the vibration detecting means 50 has detected a vibration (step S70). If it is determined that the vibration detecting means 50 has not detected a vibration (No in step S70), the control means 33 terminates this control. On the other hand, if it is determined that the vibration detecting means 50 has detected a vibration (Yes in step S70), the control means 33 determines whether or not a time is within the first predetermined time (step S71).

Note that, even if the vibration detecting means 50 has detected the vibration, this does not always mean that the gas shutoff device 30A has been detached from the gas supply pipe 31. As described above, when the gas shutoff device 30A is detached, the gas pressure value measured by the pressure measuring means 32 becomes substantially equal to the atmospheric pressure. Because of this, if it is determined that the time is within the first predetermined time (Yes in step S71), the control means 33 determines whether or not the gas pressure value measured by the pressure measuring means 32 has decreased to a value equal to or less than a predetermined pressure value (first reference value) (gas pressure value ≦ predetermined pressure value) (step S72).

After the vibration has been detected (Yes in step S70), the time is within the first predetermined time (Yes in step S71), and the gas pressure decrease has not been detected (No in step S72), the control means 33 repeats determination as to whether or not a time is within the first predetermined time (process returns to step S71). If it is determined that the time is not within the first predetermined time (first predetermined time has passed, No in step S71), the control means 33 determines that the unjust construction has not been performed, and terminates the series of control processes.

After finishing the piping construction of the bypass pipe 42, the detached gas shutoff device 30A is attached again to the gas supply pipe 31. Therefore, the vibration detecting means 50 detects a vibration again and the pressure measuring means 32 detects that the gas pressure has been restored. Therefore, after the vibration has been detected (Yes in step S70), the time is within the first predetermine time (Yes in step S71), and the gas pressure decrease has been detected (Yes in step S72), the control means 33 determines whether or not the vibration detecting means 50 has detected a vibration again (step S73).

After the vibration has been detected (Yes in step S70), the gas pressure decrease has been detected within the first predetermined time (Yes in step S72), and then the vibration has not been detected (No in step S73), the control means 33 determines that the unjust construction has not been performed, and terminates the series of control processes. On the other hand, if the vibration has been detected (Yes in step S73), the control means 33 further determines whether or not a time is within a second predetermined time (step S74). If it is determined that the time is within the second predetermined time (Yes in step S74), the control means 33 compares the gas pressure value measured by the pressure measuring means 32 to the second predetermined pressure value (second reference value) to determine whether or not the gas pressure value is equal to or greater than the second predetermined pressure value (step S75).

If it is detected that the gas pressure value is equal to or greater than the second predetermined pressure value (Yes in step S75), this means that the gas pressure value measured by the pressure measuring means 32 has decreased once and then has been restored to the level before the decrease (gas pressure has been restored). Because of this, the control means 33 determines that the gas shutoff device 30A has been detached from the gas supply pipe 31 and then attached to it again (step S76), and terminates the series of control processes. On the other hand, if it is determined that the gas pressure has not been restored within the second predetermined time (No in step S75), the control means 33 determines repetitively whether or not the time is within the second predetermined time (process returns to step S74). If it is determined that the time is not within the second predetermined time (second predetermined time has passed, No in step S74), the control means 33 determines that the unjust construction has not been performed, and terminates the series of control processes.

As described above, in the present embodiment, like Embodiment 1, the vibration (detected by the vibration detecting means 50) and the fluid pressure decrease (detected by the pressure measuring means 32) are at least detected within the preset predetermined time, the control means 33 causes the shutoff means 39 to switch to the shutoff state, and disenables the return means 38 to return the shutoff means 39 to the supply state. In particular, in the present embodiment, when the vibration detecting means 50 has detected the vibration, then the pressure measuring means 32 has detected the gas pressure decrease within the first predetermined time, then the vibration detecting means 50 has detected the vibration, and then the pressure measuring means 32 has detected that the gas pressure has been restored to the level before the decrease within the second predetermined time, the control means 33 causes the shutoff means 39 to switch to the shutoff state and disenables the return means 38 to return the shutoff means 39 to the supply state.

Thus, it can be determined that the gas shutoff device 30A has been attached to the gas supply pipe 31 again so that supply of the gas is enabled, after it was detached from the gas supply pipe 31. Therefore, the unjust construction can be detected more surely. In particular, the gas pressure decrease is detected within the first predetermined time on the basis of the detection of the vibration, and thereby it can be detected that the gas shutoff device 30A has been detached from the gas supply pipe 31. Thereafter, restoration of the gas pressure is detected within the second predetermined time on the basis of detection of the vibration, and thereby, it can be detected that the gas shutoff device 30A has been attached to the gas supply pipe 31 again. In this way, the unjust construction can be detected more surely.

As described above, in the present embodiment, if the shutoff state occurs due to the bypass work of the pipe, etc., after the utility operator has confirmed that the gas shutoff device 30A including the pipe is in a normal state, in inspection or the like when the gas shutoff device 30A is installed, the control means 33 of the gas shutoff device 30A inhibits the shutoff means 39 from returning to the supply state. This makes it possible to find out the unjust construction in at least meter reading. Therefore, it is possible to prevent unjust obtainment of the gas, or unjust usage of the gas, which would be caused by a theft of the gas shutoff device 30A, etc.. As a result, security can be further improved.

### (Embodiment 5)

A gas shutoff device according to Embodiment 5 of the present invention has fundamentally the same configuration as those of the gas shutoff devices 30A of Embodiment 1 to Embodiment 4, except that the gas shutoff device of Embodiment 5, further includes an outside communication means, and the control means 33 causes the outside communication means to perform communication at particular timings.

### [Configuration of gas shutoff device]

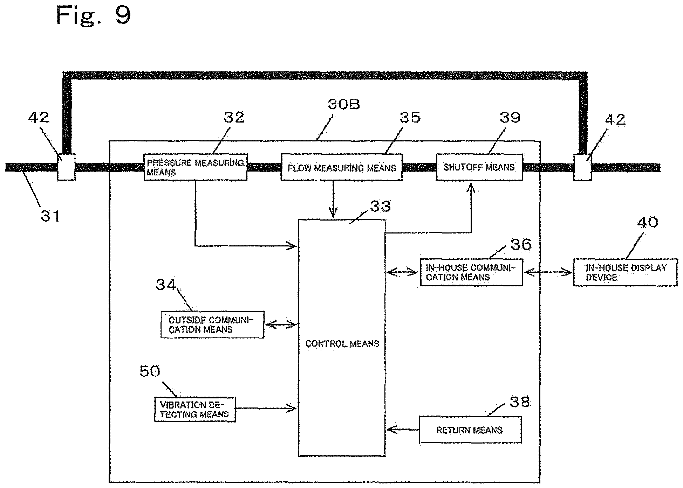

Fig. 9 is a block diagram showing an exemplary configuration of a gas shutoff device 30B according to Embodiment 5 of the present invention and a state in which unjust construction has been performed, in which the bypass pipe 42 is attached to the gas shutoff device 30B.

As shown in Fig. 9,the gas shutoff device 30B of the present embodiment includes the pressure measuring means 32, the control means 33, the flow measuring means 35, the return means 38, the shutoff means 39, and the vibration detecting means 50, like the gas shutoff devices 30A of Embodiment 1 to Embodiment 4, and further includes an outside communication means 34 and an in-house communication means 36.

The outside communication means 34 has a wire (cable) or wireless communication function. As the outside communication means 34, a known wire or wireless communication device may be suitably used, and its specific configuration is not particularly limited. The outside communication means 34 is connectable to, for example, a management center (not shown in Fig. 9) via a public line. Various kinds of information, commands, signals, etc., are transmitted and received between the outside communication means 34 and the management center.

A specific configuration of the management center is not particularly limited, and may be constituted by a known computer. The computer includes a processor and a storage section. In the storage section, an operation program for implementing a function of a management section may be stored. The processor of the computer reads the operation program from the storage section, and executes the operation program, thereby implementing the function of the management section.

The in-house communication means 36 communicates various information with an in-house display device 40, displays information on the in-house display device 40, and inputs information manipulated on the in-house display device 40. The specific configuration of the in-house communication means 36 and the specific configuration of the in-house display device 40 are not particularly limited. As the in-house communication means 36, a known wire (cable) or wireless communication device may be suitably used. As the in-house display device 40, a known display device, a display operation device, or the like which is communicatively coupled to the in-house communication means 36, may be suitably used.

Note that the in-house communication means 36 (and in-house display device 40 connected to the in-house communication means 36) may be incorporated into the gas shutoff devices 30A of Embodiment 1 to Embodiment 4 which do not include the outside communication means 34. The outside communication means 34 and the in-house communication means 36 may be recognized as functional units in the gas shutoff device 30B. Therefore, in the present embodiment, for example, the outside communication means 34 may be read as an outside communication section and the in-house communication means 36 may be read as an in-house communication section.

The gas shutoff device 30B of the present embodiment has fundamentally the same configuration as that of the gas shutoff device 30A. Therefore, if the vibration (detected by the vibration detecting means 50) and the fluid pressure decrease (detected by the pressure measuring means 32) are at least detected within the preset predetermined time, the control means 33 causes the shutoff means 39 to switch to the shutoff state, and disenables the return means 38 to return the shutoff means 39 to the supply state.

The gas shutoff device 30B further includes the outside communication means 34 which can perform communication with outside. Therefore, the control means 33 causes the outside communication means 34 to perform communication with outside at a timing of at least one of a time point after the shutoff means 39 has been switched to the shutoff state and a time point when the predetermined operation has been performed with respect to the gas shutoff device 30B when the gas shutoff device 30B is installed. Therefore, the gas shutoff device 30B is similar to the gas shutoff devices 30A of Embodiment 1 to Embodiment 4 in that the operation program of the processing flow (control in the return) of Fig. 5 and the operation program of the processing flow (control in unjust construction detecting step) of Fig. 4, Fig. 6, Fig. 7 or Fig. 8 are stored, but the operation program of the control in the installation of Embodiment 5 is different from the operation program of the processing flow of Fig. 2 described in Embodiment 1.

### [Control for gas shutoff device]

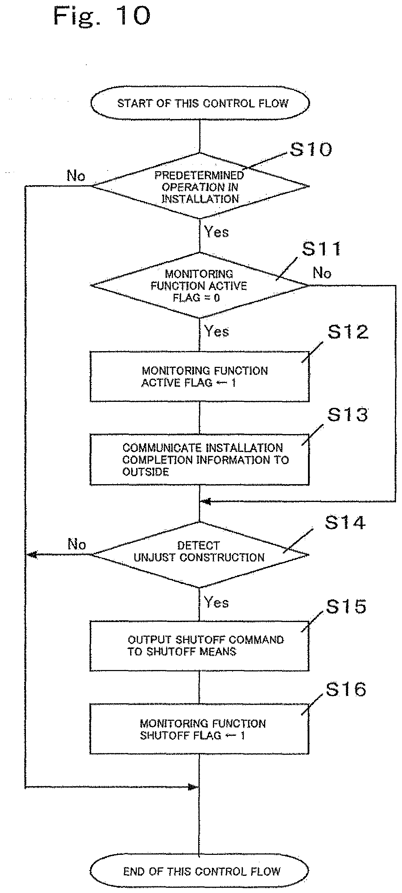

The control in the installation of the gas shutoff device 30B configured as described above will be specifically described with reference to Fig. 10.

Fig. 10 is a flowchart showing one example of control performed by the control means 33 when the gas shutoff device 30B of the present embodiment is installed.

As shown in Fig. 10, initially, the control means 33 determines whether or not the utility operator or the like performed a predetermined operation (manipulation) when the gas shutoff device 30B was installed (step S10). The predetermined operation may be an operation (manipulation) which can be performed only by the operator which installs the gas shutoff device 30B, and includes, for example, pressing (pushing) the above return means 38 several times, pressing (pushing) switch(s) of the in-house display device 40 according to a preset procedure, connecting a handy terminal (not shown) to the outside communication means 34 (described layer), handling the handy terminal according to a preset procedure, etc.. The handy terminal may be a wire(cable) or wireless handy terminal. In the case of the wireless handy terminal, the predetermined operation can be performed with respect to the gas shutoff device 30B via wireless communication.

If it is determined that the predetermined operation has not been performed with respect to the gas shutoff device 30B (No in step S10), the control means 33 terminates the control in the installation. On the other hand, if it is determined that the predetermined operation has been performed with respect to the gas shutoff device 30B (Yes in step S10), the control means 33 determines whether or not a monitoring function active flag is 0 (step S11). If it is determined that the monitoring function active flag is not 0 (No in step S11), the process goes to unjust construction detecting step (step S14). On the other hand, if it is determined that the monitoring function active flag is 0 (Yes in step S11), the monitoring function is not activated and therefore the control means 33 sets the monitoring function active flag to 1, to activate the monitoring function (step S12).

In a state in which the monitoring function is activated, the control means 33 outputs a communication command signal to the outside communication means 34, causes the outside communication means 34 to be connected to outside (e.g., the above stated management center) and to communicate installation completion information to outside (step S13). The installation completion information may be information indicating that the gas shutoff device 30B has been installed in a particular installation location by the utility operator (installation operator), and may include, for example, data or the like indicating that ID data by which the gas shutoff device 30B can be identified, data indicating that the gas shutoff device 30B has been installed, etc..

Thereafter, in the unjust construction detecting step (step S14), the control means 33 determines whether or not the unjust construction has been performed. The detail of this step is the same as the processing flow of Fig. 4, Fig. 6, Fig. 7 or Fig. 8 described in Embodiment 1 to Embodiment 4. If it is determined that the unjust construction has been performed (Yes in step S14), the control means 33 outputs a shutoff command signal to the shutoff means 39 (step S15), so that the shutoff means 39 is switched from the supply state to the switch state. Thereafter, the control means sets the monitoring function shutoff flag to 1 (step S16), and terminates the series of control processes.

As described above, in the present embodiment, the gas shutoff device 30B includes the outside communication means 34, and the control means 33 causes the outside communication means 34 to communicate to outside information indicating that installation of the gas shutoff device 30B has been completed, when the predetermined operation has been performed with respect to the gas shutoff device 30B in the installation of the gas shutoff device 30B. This allows the outside management center or the like to surely manage that the monitoring function is activated. Thus, setting of function can be prevented from being forgotten.

### (Embodiment 6)

A gas shutoff device according to Embodiment 6 of the present invention has fundamentally the same configuration as those of the gas shutoff device 30B of Embodiment 5, except that the operation program of the control in the installation is different from the operation program of the processing flow of Fig. 10 described in Embodiment 5. That is, the gas shutoff device 30B of the present embodiment is similar to the gas shutoff devices of Embodiment 1 to Embodiment 5 in that the operation program of processing flow (control in the return) of Fig. 5 and the operation program of the processing flow (control in unjust construction detecting step) of Fig. 4, Fig. 6, Fig. 7 or Fig. 8 are stored, but an operation program of control in the installation of Embodiment 6 is different from the operation program of the processing flow of Fig. 10 described in Embodiment 5.

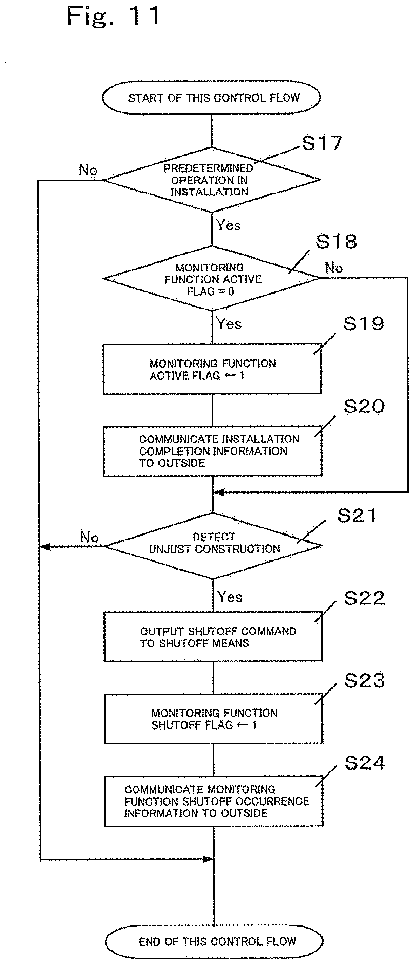

Fig. 11 is a flowchart showing one example of control performed by the control means 33 when the gas shutoff device 30B according to Embodiment 6 of the present invention is installed.

As shown in Fig. 11, initially, the control means 33 determines whether or not the utility operator or the like has performed predetermined operation (manipulation) in the installation of the gas shutoff device 30B (step S17). If it is determined that the predetermined operation has not been performed (No in step S17), the control means 33 terminates the control in the installation. On the other hand, if it is determined that the predetermined operation has been performed (Yes in step S17), the control means 33 determines whether or not a monitoring function active flag is 0 (step S18). If it is determined that the monitoring function active flag is not 0 (No in step S18), the process goes to unjust construction detecting step (step S21). On the other hand, if it is determined that the monitoring function active flag is 0 (Yes in step S18), the monitoring function is not activated, and therefore the control means 33 sets the monitoring function active flag to 1, to activate the monitoring function (step S19).

In a state in which the monitoring function is activated, the control means 33 outputs a communication command signal to the outside communication means 34, causes the outside communication means 34 to be connected to outside (e.g., the above stated management center) and to communicate installation completion information to outside (step S20). Thereafter, in the unjust construction detecting step (step S21), the control means 33 determines whether or not the unjust construction has been performed. The detail of this step is the same as the processing flow of Fig. 4, Fig. 6, Fig. 7 or Fig. 8 described in Embodiment 1 to Embodiment 4. If it is determined that the unjust construction has been performed (Yes in step S21), the control means 33 outputs a shutoff command signal to the shutoff means 39 (step S22), so that the shutoff means 39 is switched from the supply state to the shutoff state.

Thereafter, the control means 33 sets the monitoring function shutoff flag to 1 (step S23). Thereafter, the control means 33 output a communication command signal to the outside communication means 34, to causes the outside communication means 34 to be connected to outside (e.g., management center), and cause the outside communication means 34 to communicate information indicating occurrence of shutoff provided by monitoring function (step S24). The information indicating occurrence of shutoff may be information indicating that the shutoff means 39 is switched to the shutoff state in which supply of the gas is stopped and the gas is shutoff. The information indicating occurrence of the shutoff may include ID data by which the gas shutoff device 30B can be identified, data indicating that the gas shutoff device 30B is in the shutoff state, etc.. When this communication finishes, the control means 33 terminates the series of control processes.

As described above, in the present embodiment, like Embodiment 5, the control means 33 causes the outside communication means 34 to communicate information to outside at a particular timing. Especially, after switching the shutoff means 39 to the shutoff state, the control means 33 causes the outside communication means 34 to communicate information indicating that the gas is shutoff, to outside. This allows the outside management center or the like to surely manage that the monitoring function is activated, and to manage that the gas shutoff device 30C is in the shutoff state.

Therefore, in the present embodiment, if the shutoff state occurs due to the bypass work of the pipe, etc., after the utility operator has confirmed that the gas shutoff device 30B including the pipe is in a normal state, in inspection or the like when the gas shutoff device 30B has been installed, the control means 33 of the gas shutoff device 30B inhibits the shutoff means 39 from being returned to the supply state. This makes it possible to find out the unjust construction of the bypass work in at least meter reading. Therefore, it is possible to prevent unjust obtainment of the gas, or unjust usage of the gas, which would be caused by a theft of the gas shutoff device 30B, etc.. As a result, security can be further improved.

### (Embodiment 7)

A gas shutoff device according to Embodiment 7 of the present invention has fundamentally the same configuration as those of the gas shutoff devices 30A of Embodiment 1 to Embodiment 4, but the operation program of the control in the return of Embodiment 7 is different from the operation program of the processing flow of Fig. 5 described in Embodiment 1. That is, the gas shutoff device 30A of the present embodiment is similar to the gas shutoff devices of Embodiment 1 to Embodiment 4 in that the operation program of processing flow (control in the installation) of Fig. 2 and the operation program of the processing flow (control in unjust construction detecting step) of Fig. 4, 6, 7 or 8 are stored, but an operation program of control in the return of Embodiment 7 is different from the operation program of the processing flow of Fig. 5 described in Embodiment 1.

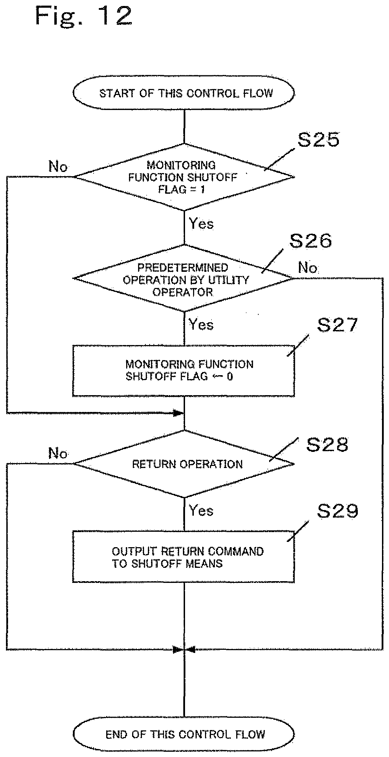

Fig. 12 is a flowchart showing one example of control performed by the control means 33 when the gas shutoff device 30A according to Embodiment 7 of the present invention is returned to the supply state.

As shown in Fig. 12, the control means 33 determines whether or not the monitoring function shutoff flag is 1 (step S25). That is, in the unjust construction detecting step, the control means 33 determines whether or not the unjust construction has been detected. If it is determined that the monitoring function shutoff flag is not 1, i.e., 0 (No in step S25), the unjust construction has not been detected, and therefore, the process goes to a step of determination as to a return operation (step S28). On the other hand, if it is determined that the monitoring function shutoff flag is 1 (Yes in step S25), the unjust construction has been detected, and therefore, the control means 33 determines whether or not the utility operator or the like has performed a predetermined operation (step S26). This predetermined operation is performed to enable the return operation. This predetermined operation is performed by the utility operator after the utility operator confirmed the unjust construction and corrected an unjust part. The predetermined operation is the same as that described in Embodiment 1 or Embodiment 5.

If it is determined that the predetermined operation has been performed (Yes in step S26), the control means 33 sets the monitoring function shutoff flag to 0 (step S27). On the other hand, if it is determined that the predetermined operation has not been performed (No in step S26), the control means 33 terminates this control. Then, in the state where the monitoring function shutoff flag is 0, the control means 33 determines whether or not the return means 38 has been operated to input a return signal, i.e., a return operation has been performed with respect to the return means 38 (step S28). If it is determined that the return operation has not been performed (No in step S28), the control means 33 terminates this control. On the other hand, if it is determined that the return operation has been performed (Yes in step S28), the unjust construction has not been detected, and therefore the control means 33 outputs a return command signal to the shutoff means 39 (step S29). The shutoff means 39 is returned from the shutoff state to the supply state. After the return command signal is output, the control means 33 terminates the series of control processes.

As described above, in the present embodiment, the control means 33 performs control for permitting the shutoff means 39 to be returned to the supply state, when the predetermined operation has been performed with respect to the gas shutoff device 30A after the shutoff means 39 was switched to the shutoff state. In the present embodiment, the utility operator must perform inspection to enable the shutoff means 39 to be returned to the supply state. As a result, the unjust portion due to the bypass work, etc., can be corrected, and safety can be further improved.

The configuration of the present embodiment is applicable to the gas shutoff devices 30B of Embodiment 5 and Embodiment 6. In this case, the control in the installation may be performed according to the operation program of the processing flow (control in the installation) of Fig. 10 or 11, and the control in the unjust construction detecting step may be performed according to the operation program of the processing flow of Fig. 4, 6, 7, or 8.

### (Embodiment 8)

A gas shutoff device according to Embodiment 8 of the present invention has fundamentally the same configuration as that of the gas shutoff device 30B of Embodiment 5 or 6, except that additional control is performed in control in the return. The gas shutoff device 30B of the present embodiment is the same as the gas shutoff devices of Embodiment 5 and Embodiment 6 in that the operation program of the processing flow (control in the installation) of Fig. 10 or Fig. 11, the operation program of processing flow (control in unjust construction detecting step) of Fig. 4, Fig. 6, Fig. 7 or Fig. 8, and the operation program of the processing flow (control in the return) of Fig. 5 described in Embodiment 1, are stored, but is different from the same in that an operation program of an additional processing flow which is executed before the processing flow of Fig. 5 in control in the return is stored in the gas shutoff device 30B of the present embodiment.

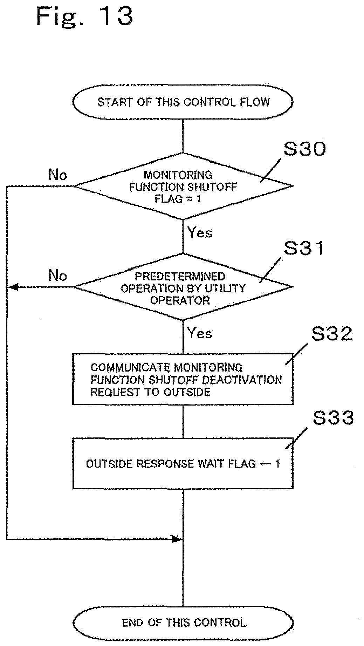

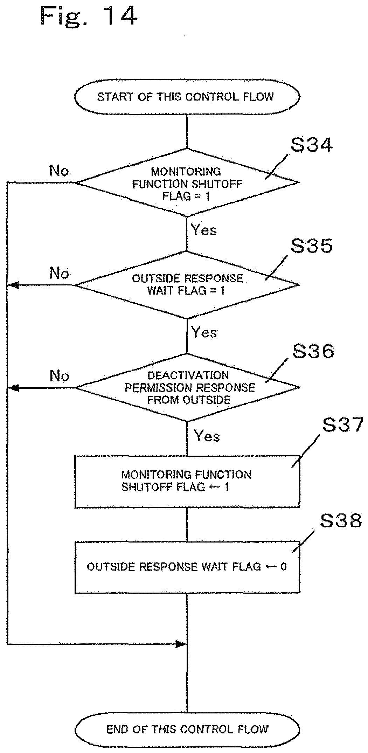

Fig. 13 is a flowchart showing one example of control performed by the control means 33 when the gas shutoff device 30B according to Embodiment 8 of the present invention is returned to the supply state. Fig. 14 is a flowchart showing one example of a process for permitting a monitoring function shutoff to be deactivated in the gas shutoff device 30B of the present embodiment.

As shown in Fig. 13, the control means 33 determines whether or not the monitoring function shutoff flag is 1 (step S30). That is, in the unjust construction detecting step, the control means 33 determines whether or not the unjust construction has been detected. If it is determined that the monitoring function shutoff flag is not 1, i.e., 0 (No in step S30), the unjust construction has not been detected, and therefore, the control means 33 terminates this control. On the other hand, if it is determined that the monitoring function shutoff flag is 1 (Yes in step S30), the unjust construction has been detected, and therefore, the control means 33 determines whether or not the predetermined operation has been performed by the utility operator (step S31). This predetermined operation is performed to enable a return operation as described in Embodiment 7.

If it is determined that the predetermined operation has not been performed (No in step S31), the control means 33 terminates this control. On the other hand, if it is determined that the predetermined operation has been performed (Yes in step S31), the control means 33 outputs a communication command signal to the outside communication means 34, causes the outside communication means 34 to be connected to outside (e.g., the above stated management center) and to communicate a monitoring function shutoff deactivation request to outside (step S32). The monitoring function shutoff deactivation request is a request for cancelling the state in which the unjust construction has been detected, and is communicated to outside by the outside communication means 34 after the utility operator has confirmed the unjust construction and corrected the unjust part. Thereafter, the control means 33 sets an outside response wait flag to 1 (step S33), and terminates the series of control processes.

In the state in which the outside response flag is 1, the gas shutoff device 30B is awaiting a response for deactivating the monitoring function shutoff from outside (management center, etc..). The control means 33 performs control for permitting the monitoring function shutoff to be deactivated as shown in Fig. 14.

Specifically, the control means 33 determines whether or not the monitoring function shutoff flag is 1 (step S34). If it is determined that the monitoring function shutoff flag is 1 (Yes in step S34), the control means 33 determines whether or not the outside response wait flag is 1 (step S35). If it is determined that the outside response wait flag is 1 (Yes in step S35), the control means 33 determines whether or not the outside communication means 34 has received the response for deactivating the monitoring function shutoff, from outside, i.e., whether or not there is a response for permitting the deactivation (step S36). If it is determined that there is the response for permitting the deactivation (Yes in step S36), the control means 33 sets the monitoring function shutoff flag to 0, deactivates the monitoring function shutoff (step S37), sets the outside response wait flag to 0, deactivates the wait state of the response (step S38), and terminates the series of control processes. In this state, by performing the predetermined return operation with respect to the gas shutoff device 30B, i.e., control of the processing flow of Fig. 5, the shutoff means 39 can be returned from the shutoff state to the supply state.

As described above, in the present embodiment, when the predetermined operation has been performed with respect to the gas shutoff device 30B after the shutoff means 39 was switched to the shutoff state, the control means 33 causes the outside communication means 34 to transmit the response request (monitoring function shutoff deactivation request) to outside. And, receiving the response (deactivation permission response) from outside, the control means 33 permits the shutoff means 39 to be returned to the supply state. In this way, in the present embodiment, permission of the return to the supply state is requested to outside after completing the inspection work by the utility operator in the location where the gas shutoff device 30B is provided. This makes it possible to surely manage that the unjust portion due to the bypass work, etc., has been corrected and store this information. Moreover, since the permission is requested to outside, healthiness (soundness) of the outside communication can be confirmed.

### (Embodiment 9)

A gas shutoff device according to Embodiment 9 of the present invention has fundamentally the same configuration as those of the gas shutoff devices 30A of Embodiment 1 to Embodiment 4 and Embodiment 7 or the gas shutoff devices 30B of Embodiment 5, Embodiment 6, and Embodiment 8, but is different from them in that the gas shutoff device of the present embodiment further includes a card processing means for writing and reading information to and from a card-type storage medium and uses the information read by the card processing means for the control performed by the control means 33.

### [Configuration of gas shutoff device]

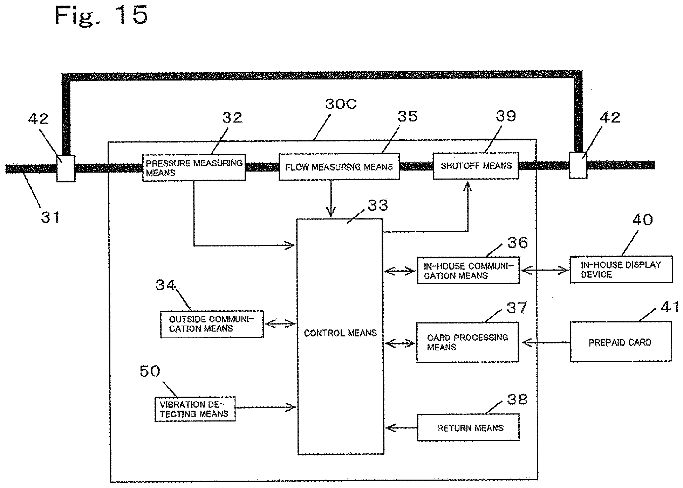

Fig. 15 is a block diagram showing an exemplary configuration of a gas shutoff device 30C according to Embodiment 9 of the present invention, and a state in which the unjust construction has been performed in which the bypass pipe 42 is attached to the gas shutoff device 30C, as in the example of Fig. 3 or 9.

As shown in Fig. 15, the gas shutoff device 30C of the present embodiment includes the pressure measuring means 32, the control means 33, the outside communication means 34, the flow measuring means 35, the in-house communication means 36, the return means 38, the shutoff means 39, and the vibration detecting means 50, like the gas shutoff devices 30B of Embodiment 5, Embodiment 6, and Embodiment 8, and further includes a card processing means 37.

The card processing means 37 is configured to write and read information to and from a card-type storage medium, for example, a prepaid card 41 shown in Fig. 15, in response to a command signal received from the control means 33. As the card processing means 37, there are a known card reader/writer, etc., but its specific configuration is not particularly limited. Although in the present embodiment, the prepaid card 41 is used as the card-type storage medium, other known card-type storage medium may be used. Information to be written and read to and from the card-type storage medium is, for example, fare information, etc., in the case of the prepaid card 41. However, depending on the kind, use purpose, etc., of the card-type storage medium, other various kinds of information can be written and read.

The prepaid card 41 may be a magnetic card, an IC card, a flash-memory type small card, or a card of another configuration. Although the gas shutoff device 30C of the present embodiment includes the card processing means 37 for writing and reading the information to and from the card-type storage medium, it may include another storage medium writing/reading means, instead of the card processing means 37.

Alternatively, the card processing means 37 (and card-type storage medium such as the prepaid card 41 insertable into the card processing means 37) may be incorporated into the gas shutoff devices 30A of Embodiment 1 to Embodiment 4 which do not include the outside communication means 34. Since the outside communication means 34 and the in-house communication means 36 may be said as the functional units in the gas shutoff device 30B, in the present embodiment, the card processing means 37 may be read as, for example, a card processing section, a card-type storage medium information writing/reading section, etc..

The gas shutoff device 30C of the present embodiment has fundamentally the same configuration as that of the above stated gas shutoff device 30B. Therefore, when the vibration (detected by the vibration detecting means 50) and the fluid pressure decrease (detected by the pressure measuring means 32) are at least detected within the preset predetermined time, the control means 33 switches the shutoff means 39 to the shutoff state and disenables the return means 38 to return the shutoff means 39 to the supply state.

The gas shutoff device 30C further includes the card processing means 37 for writing and reading the information to and from the card-type storage medium such as the prepaid card 41 in the state in which the card-type storage medium is inserted into the card processing means 37. The control means 33 performs control to deactivate (disenable) a function for switching of the shutoff means 39 to the shutoff state and a function for disenabling the return means 38 to return the shutoff means 39 to the supply state, unless the card-type storage medium is inserted into the card processing means 37 to read the information in the installation.

The gas shutoff device 30C is the same as the gas shutoff devices of Embodiment 5, Embodiment 6 and Embodiment 8 in that the operation program of the processing flow (control in the return) of Fig. 5 or Fig. 12 and the operation program of the processing flow (control in the unjust construction detecting step) of Fig. 4, 6, 7 or 8 are stored, but an operation program of the control in the installation of the present embodiment is different from the operation program of the processing flow of Fig. 10 described in Embodiment 5 or the operation program of the processing flow of Fig. 11 described in Embodiment 6.

### [Control for gas shutoff device]

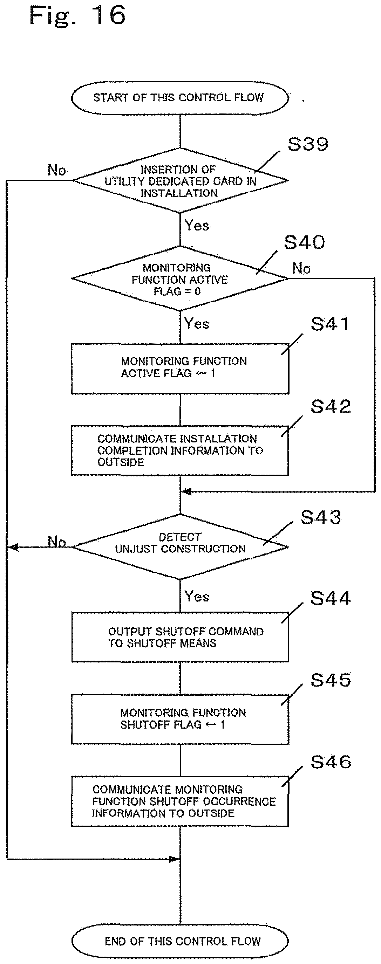

The control in the installation of the gas shutoff device 30C configured as described above will be specifically described with reference to Fig. 16.

Fig. 16 is a flowchart showing one example of control performed by the control means 33 when the gas shutoff device 30C of the present embodiment is installed.

As shown in Fig. 16, initially, the control means 33 determines whether or not a utility dedicated card is inserted into the card processing means 37 (step S39). The utility dedicated card is a card-type storage medium corresponding to the prepaid card 41 of Fig. 15, and contains inspection completion information in installation of the gas shutoff device 30C. By inserting the utility dedicated card into the card processing means 37, the card processing means 37 reads the information and outputs the information to the control means 33.

The utility dedicated card may be "installation dedicated card" which is dedicated for installation (or return), but is more preferably, "inspection completion card" which can be used for both of the installation and the return. In the case of the installation dedicated card, only information to be inspected in installation may be stored in the utility dedicated card (in the case of the return dedicated card, only information to be inspected in return may be stored in the utility dedicated card). By comparison, in the case of the inspection completion card which can be used for both of the installation and the return, the information to be inspected when the gas shutoff device 30C in the shutoff state due to detection of the unjust construction is returned to the supply state, may be stored in the utility dedicated card, in addition to the information in the installation. That is, by storing inspection completion information used in the installation and inspection completion information used in the return, in the utility dedicated card, the utility operator may insert the same utility dedicated card into the card processing means 37 after completing the inspection work in the location where the gas shutoff device 30C is provided, in both of the installation and the return.

Upon the utility dedicated card being inserted into the card processing means 37, the card processing means 37 inputs to the control means 33, a signal (card insertion signal) indicating that the utility dedicated card is inserted into the card processing means 37 and information can be written and read. Receiving the card insertion signal, the control means 33 determines that the utility dedicated card is inserted into the card processing means 37 (Yes in step S39). If the card insertion signal is not received, the control means 33 determines that the utility dedicated card is not inserted into the card processing means 37 (No in step S39).

If it is determined that the utility dedicated card is not inserted, the control means 33 terminates the control in the installation. On the other hand, if it is determined that the utility dedicated card is inserted, the control means 33 determines whether or not the monitoring function active flag is 0 (step S40). If it is determined that the monitoring function active flag is not 0 (No in step S40), the process goes to the unjust construction detecting step (step S43). On the other hand, if it is determined that the monitoring function active flag is 0 (Yes in step S40), the monitoring function is not activated. Therefore, the control means 33 sets the monitoring function active flag to 1 to activate the monitoring function (step S42).

In a state in which the monitoring function is activated, the control means 33 outputs a communication command signal to the outside communication means 34, causes the outside communication means 34 to be connected to outside (e.g., the above stated management center) and to communicate installation completion information to outside (step S43). Then, in unjust construction detecting step (step S43), the control means 33 determines whether or not the unjust construction has been performed. The detail of this step is the same as the processing flow of Fig. 4, Fig. 6, Fig. 7 or Fig. 8 described in Embodiment 1 to Embodiment 4. If it is determined that the unjust construction has been performed (Yes in step S43), the control means 33 outputs a shutoff command signal to the shutoff means 39 (step S44), so that the shutoff means 39 is switched from the supply state to the shutoff state.

After that, the control means 33 sets the monitoring function shutoff flag to 1 (step S45). Then, the control means 33 outputs a communication command signal to the outside communication means 34, causes the outside communication means 34 to be connected to outside (e.g., the above stated management center) and to communicate information indicating occurrence of shutoff provided by the monitoring function, to outside (step S46). After this communication finishes the control means 33 terminates the series of control processes.

As described above, in the present embodiment, the control means 33 activates the control for switching the shutoff means 39 to the shutoff state and for disenabling the return means 38 to return the shutoff means 39 to the supply state, after the card-type storage medium has been inserted into the card processing means 37 in the installation and the information is read from the card-type storage medium.

Thus, in a stage of the inspection performed in the installation, the utility operator confirms that the overall gas shutoff device 30C including the pipe is normal and inserts the utility dedicated card into the card processing means 37. Therefore, by merely inserting the utility dedicated card, the function for detecting the unjust construction can be activated easily and surely. In addition, when the gas shutoff device 30C is returned to the supply state by the utility operator, the utility operator can find occurrence of the shutoff state due to the unjust construction such as the bypass work of the pipe, etc.. Therefore, it is possible to prevent unjust obtainment of the gas, or unjust usage of the gas, which would be caused by a theft of the gas shutoff device 30A, etc.. As a result, security can be further improved.

### (Embodiment 10)

A gas shutoff device according to Embodiment 10 of the present invention has fundamentally the same configuration as that of the gas shutoff device 30C of Embodiment 9, but the operation program of the control in the return of Embodiment 10 is different from the operation program of of the processing flow of Fig. 5 described in Embodiment 1 or the operation program of the processing flow of Fig. 12 described in Embodiment 7. That is, the gas shutoff device 30C of the present embodiment is similar to the gas shutoff device of Embodiment 9 in that the operation program of processing flow (control in the installation) of Fig. 16 and the operation program of the processing flow (control in the unjust construction detecting step) of Fig. 4, 6, 7 or 8 are stored, but an operation program of control in the return of Embodiment 10 is different from the operation program of the processing flow of Fig. 5 or 12.

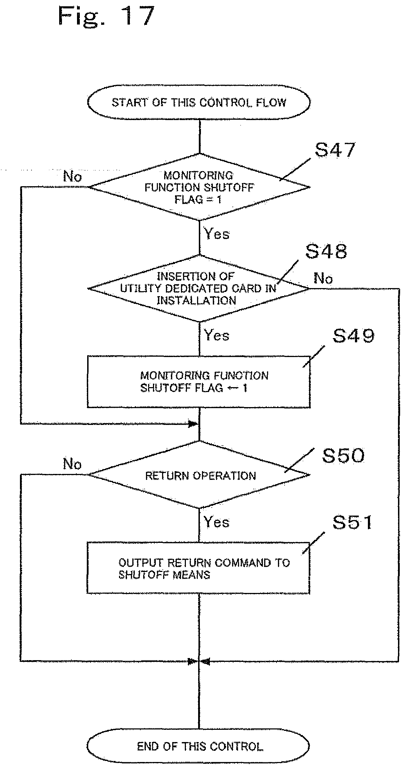

Fig. 17 is a flowchart showing one example of control performed by the control means 33 when the gas shutoff device 30C according to Embodiment 10 of the present invention is returned to the supply state.

As shown in Fig. 17, the control means 33 determines whether or not the monitoring function shutoff flag is 1 (whether or not the unjust construction has been detected in the unjust construction detecting step) (step S47). If it is determined that the monitoring function shutoff flag is not 1, i.e., 0 (No in step S47), the unjust construction has not been detected, and therefore the process goes to determination as to a return operation (step S50). On the other hand, if it is determined that the monitoring function shutoff flag is 1 (Yes in step S47), the unjust construction has been detected. Therefore, the control means 33 determines whether or not the utility dedicated card is inserted (step S48). As described in Embodiment 9, the utility dedicated card is inserted after the inspection is performed in the location where the gas shutoff device 30C is provided when the gas shutoff device 30C is returned to the supply state. And, by inserting the utility dedicated card into the card processing means 37, the inspection completion information is read and output to the control means 33.

If it is determined that the utility dedicated card is inserted (Yes in step S48), the inspection completion information is output to the control means 33. In response to this, the control means 33 sets the monitoring function shutoff flag to 0 (step S49). On the other hand, if it is determined that the utility dedicated card is not inserted (No in step S48), the control means 33 terminates this control. Then, in the state in which the monitoring function shutoff flag is 0, the control means 33 determines whether or not the return means 38 has been operated to input a return signal, i.e., a return operation has been performed with respect to the return means 38 (step S50). If it is determined that the return operation has not been performed with respect to the return means 38 (No in step S50), the control means 33 terminates this control. On the other hand, if it is determined that the return operation has been performed with respect to the return means 38 (Yes in step S50), the unjust construction has not been detected. Therefore, the control means 33 outputs a return command signal to the shutoff means 39 (step S51), and the shutoff means 39 is returned from the shutoff state to the supply state. By outputting the return command signal, the control means 33 terminates the series of control processes.

As described above, in the present embodiment, the control means 33 enables the return means 38 to return the shutoff means 39 to the supply state in the case where the card-type storage medium is inserted into the card processing means 37 and the information is read from the card-type storage medium after the shutoff means 39 has been switched to the shutoff state. In this configuration, the inspection work must be performed by the utility operator in the location where the gas shutoff device 30C is provided to enable the gas shutoff device 30C to be returned to the supply state. Therefore, the utility operator can confirm more surely whether or not the unjust construction has been performed. In addition, as in the case of the installation described in Embodiment 9, by merely inserting the utility dedicated card into the card processing means 37,the gas shutoff device 30C is easily and surely permitted to be returned to the supply state. As a result, the unjust portion due to the bypass work or the like can be corrected, and safety can be more surely ensured.

### (Embodiment 11)

A gas shutoff device according to Embodiment 11 of the present invention has fundamentally the same configuration as that of the gas shutoff device 30C of Embodiment 9 or Embodiment 10, but is different from the same in that further control is performed in addition to the control in the return to the supply state. That is, the gas shutoff device C of the present embodiment is the same as the gas shutoff devices of Embodiment 9 and Embodiment 10 in that the operation program of processing flow (control in the installation) of Fig. 16, the operation program of the processing flow (control in unjust construction detecting step) of Fig. 4, Fig.6, Fig. 7 or Fig. 8, and the operation program of the processing flow (control in the return) of Fig. 17 are stored, but is different from them in that an operation program of processing flow in control in the return is further stored in the gas shutoff device 30C of Embodiment 11.

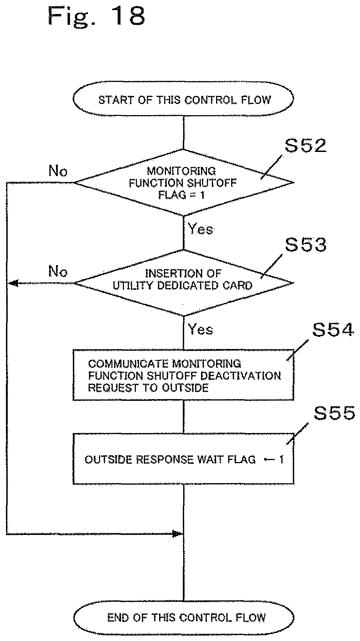

Fig. 18 is a flowchart showing one example of a process for permitting monitoring function shutoff to be deactivated, in the control means 33 of the gas shutoff device 30C of the present embodiment. The process for permitting the monitoring function shutoff to be deactivated is the step described in Embodiment 8.

As shown in Fig. 18, the control means 33 determines whether or not the monitoring function shutoff flag is 1 (step S52). If it is determined that the monitoring function shutoff flag is 1 (Yes in step S52), the control means 33 determines whether or not the utility dedicated card is inserted (step S53). If it is determined that the utility dedicated card is inserted (Yes in step S53), the control means 33 outputs a communication command signal to the outside communication means 34, causes the outside communication means 34 to be connected to outside (e.g., the above stated management center) and to communicate a monitoring function shutoff deactivation request to outside (step S54). Receiving a deactivation permission response thereafter, the control means 33 sets an outside response wait flag to 0, deactivates a wait state of the response (step S55), and terminates the series of control processes. Thus, by inserting the utility dedicated card into the card processing means 37 of the gas shutoff device 30C, the shutoff means 39 can be returned from the shutoff state to the supply state.

As described above, in the present embodiment, in the case where the card-type storage medium is inserted into the card processing means 37 and the information is read from the card-type storage medium after the shutoff means 39 has been switched to the shutoff state, the control means 33 causes the outside communication means 34 to transmit the response request (monitoring function shutoff deactivation request), and permits the shutoff means 39 to be returned to the supply state upon reception of the response from outside.

Thus, in the present embodiment, after the utility operator has completed the inspection work in the location where the gas shutoff device 30C is provided and the unjust portion has been corrected, the utility dedicated card is inserted to request permission of the return to outside. By an easy and reliable operation, it becomes possible to surely manage that the unjust portion has been corrected and store this information. Moreover, since the permission is requested to outside, healthiness (soundness) of the outside communication can be confirmed.

### [Modified example]

As described above, each of the gas shutoff devices 30A to 30C of the present invention includes the shutoff means 39 coupled to the gas supply pipe 31 and configured to supply and shutoff the gas, the control means 33 for controlling at least the shutoff means 39, the flow measuring means 35 for measuring the gas flow rate, the pressure measuring means 32 for measuring the gas pressure, the vibration detecting means 50 for detecting the vibration, and the return means 38 for returning the shutoff means 39 from the shutoff state to the supply state (return state) in which the gas flows through the gas supply pipe 31, and preferably the outside communication means 34 which enables communication with outside. When detecting that the vibration due to detaching of the pipe, etc., based on the signal received from the vibration detecting means 50 after the utility operator or the like has performed the predetermined operation in the installation, and the gas pressure measured by the pressure measuring means 32 has decreased to the value equal to or less than the predetermined value which cannot occur in a normal state, within the predetermined time, the control means 33 outputs the command signal to the shutoff means 39, thereby disenabling the return means 38 to return the shutoff means 39 to the supply state, when the gas pressure measured by the pressure measuring means 32 has decreased to the value equal to or less than the predetermined value which cannot occur in a normal state, within the predetermined time. After the shutoff state, the control means 33 outputs the command signal to the outside communication means 34 to cause the outside communication means 34 to communicate with outside and disenables the return means 38 to return the shutoff means 39 to the supply state. After shutting off the gas, by the utility operator's predetermined operation, or by communication with outside is enabled by the utility operator's predetermined operation and reception of the response from outside, the shutoff means 39 can be returned to the supply state.

In accordance with this configuration, the utility operator can surely find out occurrence of the shutoff due to the unjust construction such as the bypass work of the pipe. This makes it possible to prevent the gas from being obtained unjustly merely by sealing the gas shutoff device 30A to 30C, and prevent an unjust usage which would be caused by a theft, etc., and to improve safety.

The present invention is not limited to the above stated configuration, and various modified examples can be implemented without departing the scope of the present invention. For example, in Embodiment 1 to Embodiment 11, in the control performed by the control means 33 of the present invention, the above stated processing flows are implemented by running a processor of a microcomputer, etc., according to operation programs stored in the storage means. However, the present invention is not limited to this, and the processing flows can be implemented using known hardware instead of the operation programs.

Although in Embodiment 1 to Embodiment 11, the gas shutoff devices 30A to 30C are illustrated as a representative of the present invention, the present invention is not limited to this, but a configuration for shutting off another fluid may be used. Fluids to which the present invention is applied may be liquid such as water, a liquid fuel, etc., as well as the gas. Therefore, the present invention may be a fluid shutoff device including the above stated configuration, and is not limited to the gas shutoff devices 30A to 30C.

The present invention includes, in addition to a fluid shutoff device such as the gas shutoff devices 30A to 30C, a computer program for causing a computer to execute a control method of the control means 33 included the fluid shutoff device. Moreover, the present invention includes a computer-readable storage medium containing the computer program.

In Embodiment 1, Embodiment 5, etc., when either one of the vibration and the fluid pressure decrease is detected after the predetermined operation has been performed in the installation, and thereafter the other is detected within the predetermined time, the shutoff means 39 is switched to the shutoff state and the return means 38 is disenabled to return the shutoff means 39 to the supply state. However, the present invention is not limited to this. Although the predetermined operation performed with respect to the gas shutoff device 30A in the installation triggers the control of the present invention, the control of the present invention may be triggered by performing the predetermined operation even after the installation.

Although in Embodiment 1 to Embodiment 11, the predetermined time starts from a time point when at least one of the vibration and the fluid pressure decrease is detected, the present invention is not limited to this. For example, the predetermined time may start from a time point when some operation or the like, required to detach the gas shutoff device 30A to 30C from the gas supply pipe 31 has been performed. That is, in the present invention, when the vibration (detected by the vibration detecting means 50) and the fluid pressure decrease (detected by the pressure measuring means 32) are at least detected within the predetermined time, the control means 33 causes the shutoff means 39 to switch to the shutoff state, and disenables the return means 38 to return the shutoff means 39 to the supply state.

In the present invention, as a determination criterion for inhibiting the shutoff means 39 from being returned from the shutoff state to the supply state, detection of the vibration by the vibration detecting means 50 and detection of the fluid pressure decrease by the pressure measuring means 32 may be used, and further another measurement values and detection of another conditions may be used. In the present embodiment, when one of the vibration and the fluid pressure decrease is detected and thereafter the other is detected within the predetermined time, the control means 33 disenables the return means 38 to return the shutoff means 39 to the supply state. However, the present invention is not limited to this.

For example, as described in Embodiment 3 or Embodiment 4, when the gas pressure has been restored to the level before the decrease within the predetermined time after the other of the vibration and the fluid pressure decrease is detected within the predetermined time, the control means 33 may inhibit the shutoff means 39 from being returned to the supply state. Therefore, restoration of the gas pressure may be used as the determination criterion for inhibiting the shutoff means 39 from being returned to the supply state. Likewise, in Embodiment 4, it is determined whether or not the vibration is detected again before the gas pressure is restored. Thus, the determination criterion may be repeated plural times.

A gas shutoff device of the present invention may include a shutoff means coupled to a gas supply pipe and configured to supply and shutoff the gas, a control means for controlling the shutoff means, a flow measuring means for measuring a gas flow rate, a pressure measuring means for measuring a gas pressure, a vibration detecting means for detecting a vibration, and a return means for returning the shutoff means from the shutoff state to the supply state (return state) in which the gas flows through the gas supply pipe, and the control means may cause the shutoff means to shut off the gas and disenables the return means to return the shutoff means to the supply state, if the pressure measuring means has detected a gas pressure that has decreased to a value equal to or less than a predetermined pressure value within a predetermined time after the vibration detecting means has detected the vibration after the utility operator or the like has performed a predetermined operation when the gas shutoff device is installed.

Thus, if shutoff occurs due to the bypass work of the pipe, etc., after the utility operator has confirmed that the gas shutoff device including the pipe is in a normal state, in inspection or the like when the gas shutoff device is installed, the control means of the gas shutoff device inhibits the shutoff means from returning to the supply state. This makes it possible to find out the unjust construction in at least meter reading. Therefore, it is possible to prevent unjust obtainment of the gas, or unjust usage of the gas, which would be caused by a theft of the gas shutoff device, etc.. As a result, security can be ensured.

A gas shutoff device of the present invention may include a shutoff means coupled to a gas supply pipe and configured to supply and shutoff the gas, a control means for controlling the shutoff means, a flow measuring means for measuring a gas flow rate, a pressure measuring means for measuring a gas pressure, a vibration detecting means for detecting a vibration, and a return means for returning the shutoff means from a shutoff state to a supply state (return state) in which the gas flows through the gas supply pipe, and the control means may output a shutoff command to cause the shutoff means to shut off the gas and disenables the return means to return the shutoff means to the supply state, if the vibration detecting means has detected the vibration within a predetermined time after the pressure measuring means has detected a gas pressure that has decreased to a value equal to or less than a predetermined value.

Thus, if the shutoff state occurs due to the bypass work of the pipe, etc., after the utility operator has confirmed that the gas shutoff device including the pipe is in a normal state, in inspection or the like when the gas shutoff device is installed, the control means of the gas shutoff device inhibits the shutoff means from being returned to the supply state. This makes it possible to find out the unjust construction in at least meter reading. Therefore, it is possible to prevent unjust obtainment of the gas, or unjust usage of the gas, which would be caused by a theft of the gas shutoff device, etc.. As a result, security can be ensured.

A gas shutoff device of the present invention may include a shutoff means coupled to a gas supply pipe and configured to supply and shutoff the gas, a control means for controlling the shutoff means, a flow measuring means for measuring a gas flow rate, a pressure measuring means for measuring a gas pressure, a vibration detecting means for detecting a vibration, and a return means for returning the shutoff means from the shutoff state to the supply state (return state) in which the gas flows through the gas supply pipe, and the control means may cause the shutoff means to shut off the gas and disenables the return means to return the shutoff means to the supply state, if the gas pressure detected by the pressure measuring means has decreased to a value equal to or less than a predetermined pressure value, then the vibration detecting means has detected the vibration within a predetermined time, and then the gas pressure measured by the pressure measuring means has been restored to a level before the decrease within a predetermined time.

Thus, if shutoff occurs due to the bypass work of the pipe, etc., after the utility operator has confirmed that the gas shutoff device including the pipe is in a normal state, in inspection or the like when the gas shutoff device is installed, the control means of the gas shutoff device inhibits the shutoff means from being returned to the supply state. This makes it possible to find out the unjust construction in at least meter reading. Therefore, it is possible to prevent unjust obtainment of the gas, or unjust usage of the gas, which would be caused by a theft of the gas shutoff device, etc.. As a result, security can be ensured.

A gas shutoff device of the present invention may include a shutoff means coupled to a gas supply pipe and configured to supply and shutoff the gas, a control means for controlling at least the shutoff means, a flow measuring means for measuring a gas flow rate, a pressure measuring means for measuring a gas pressure, a vibration detecting means for detecting a vibration, and a return means for returning the shutoff means from the shutoff state to the supply state (return state) in which the gas flows through the gas supply pipe, and the control means may cause the shutoff means to shut off the gas and disenables the return means to return the shutoff means to the supply state, if the vibration detecting means has detected the vibration, then the gas pressure detected by the pressure measuring means has decreased to a value equal to or less than a predetermined pressure value within a predetermined time, then the vibrating detecting means has detected the vibration, and then the gas pressure measured by the pressure measuring means has been restored to a level before the decrease within a predetermined time.

Thus, if the shutoff state due to the bypass work of the pipe, etc., after the utility operator has confirmed that the gas shutoff device including the pipe is in a normal state, in inspection or the like when the gas shutoff device is installed, the control means of the gas shutoff device inhibits the shutoff means from being returned to the supply state. This makes it possible to find out the unjust construction in at least meter reading. Therefore, it is possible to prevent unjust obtainment of the gas, or prevent unjust usage of the gas, which would be caused by a theft of the gas shutoff device, etc.. As a result, security can be ensured.

A gas shutoff device of the present invention may include, in one of the above stated configurations, an outside communication means which is capable of communication with outside, and the control means may be configured to output a command to the outside communication means to communicate to outside information indicating that installation of the gas shutoff device is completed when a utility operator or the like has performed a predetermined operation when the gas shutoff device is installed.

This makes it possible to surely manage that the function is activated, and to prevent setting of the function from being forgotten.

A gas shutoff device of the present invention may include, in one of the above stated configurations, an outside communication means which is capable of communication with outside, and the control means may be configured to output a command to the outside communication means to communicate to outside information indicating that gas is shut off after the shutoff means has shut off the gas.

This makes it possible to immediately find out occurrence of shutoff due to a bypass work of a pipe, etc., after the utility operator has confirmed that the gas shutoff device including the pipe is normal, in inspection performed when the gas shutoff device is installed, and to quickly address occurrence of the situation. Therefore, it is possible to prevent unjust obtainment of the gas, or prevent unjust usage of the gas, which would be caused by a theft of the gas shutoff device, etc.. As a result, security can be ensured.

In a gas shutoff device of the present invention, in one of the above stated configurations, the control means may be configured to allow the shutoff means to be returned to a supply state by the utility operator's predetermined operation after the shutoff means has shut off the gas.

To allow the shutoff means to be returned to the supply state, the utility operator's inspection work becomes necessary in the location where the gas shutoff device is provided. Therefore, the unjust portion due to the bypass work, etc., can be corrected, and safety can be ensured.

A gas shutoff device of the present invention may include, in one of the above stated configurations, an outside communication means which is capable of communication with outside, and the control means may be configured to cause the outside communication means to communicate with outside in response to the utility operator's predetermined operation and to permit the shutoff means to be returned to a supply state upon reception of a response from outside, after the shutoff means has shutoff the gas.

This makes it possible to surely manage that the utility operator has completed the inspection work in the location where the gas shutoff device is provided and the unjust portion due to the bypass work, etc., has been corrected, and store the information of them. As a result, healthiness (soundness) of the outside communication can be confirmed.

A gas shutoff device of the present invention may include, in one of the above stated configurations, may further comprise a card processing means for writing and reading information to and from a prepaid card, wherein the control means may be configured to allow the shutoff means to shut off the gas and disenable the return means to return the shutoff means to a supply state after the card processing means outputs a signal by inserting a utility dedicated card into the card processing means by the utility operator, or the like when the gas shutoff device is installed.

This makes it possible to surely and easily activate the monitoring function of an unjust usage merely by inserting the utility dedicated card into the card processing means after the utility operator has confirmed that the gas shutoff device including the pipe is normal, in inspection performed when the gas shutoff device is installed. Also, this makes it possible to find out occurrence of shutoff due to a bypass work of a pipe, etc., to prevent unjust obtainment of the gas, or unjust usage of the gas, which would be caused by a theft of the gas shutoff device, etc.. As a result, security can be ensured.

In the present invention, the control means having the above configuration may be configured to allow the shutoff means to be returned to a supply state in response to a signal output from the card processing means by inserting a utility dedicated card into the card processing means by the utility operator after the shutoff means has shut off the gas.

To allow the shutoff means to be returned to a supply state, the utility operator's inspection work becomes necessary in the location where the gas shutoff device is provided. Also, by merely inserting the utility dedicated card, the return to the supply state can be permitted easily and surely. Therefore, the unjust portion due to the bypass work, etc., can be corrected, and safety can be ensured.

A gas shutoff device of the present invention may include, in the above stated configurations, an outside communication means which is capable of communication with outside, and the control means may be configured to cause the outside communication means to communicate with outside in response to a signal output from the card processing means by inserting the utility dedicated card into the card processing means, and to allow the shutoff means to be returned to a supply state upon reception of a response from outside, after the shutoff means has shut off the gas.

This makes it possible to easily and surely manage that the utility operator has completed the inspection work and corrected the unjust portion due to the bypass work, etc., in the location where the shutoff device is provided, and to store information of them merely by inserting the utility dedicated card. In addition, healthiness of the outside communication can be confirmed.

The present invention may be a program for causing a computer to function as an entire or a part of the gas shutoff device having any of the above stated configurations. At least a portion of the program of the present invention can be easily implemented merely by using a general computer or a server. The program can be delivered or installed easily by storing the program in a storage medium or by delivering the program via a communication line.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the scope of the invention, limited only by the appended claims.

### Industrial Applicability

As described above, a gas shutoff device of the present invention can prevent unjust obtainment of a gas due to a bypass work of a pipe, etc., or an unjust usage of the gas which would be caused by a theft of the gas shutoff device, etc., which cannot be prevented by sealing of a meter body. Therefore, the gas shutoff device of the present invention is widely applicable to meters of various kinds of fluids such as a tap water meter as well as a gas meter.

### Reference Signs Lists

- 30: gas shutoff device
- 31: gas supply pipe
- 32: pressure measuring means
- 33: control means
- 34: outside communication means
- 35: flow measuring means
- 36: in-house communication means
- 37: card processing means
- 38: return means
- 39: shutoff means
- 40: in-house display device
- 41: prepaid card
- 42: bypass pipe
- 50: vibration detecting means

## Claims

1. A fluid shutoff device (30) comprising:
a shutoff means (39) coupled to a fluid supply pipe and configured to switch from a supply state in which a fluid flows through the fluid supply pipe (31) to a shutoff state in which the fluid is shutoff;
a control means (33) for controlling at least the shutoff means;
a flow measuring means (35) for measuring a flow rate of the fluid;
a pressure measuring means (32) for measuring a pressure of the fluid;
a vibration detecting means (50) for detecting a vibration; and
a return means (38) for returning the shutoff means (39) from the shutoff state to the supply state;
wherein when the vibration detecting means (50) has detected the vibration within a preset predetermined time, and it has been detected that the pressure of the fluid measured by the pressure measuring means (32) has decreased to a value equal to or less than a predetermined pressure value within a preset predetermined time, the control means (33) causes the shutoff means (39) to switch to the shutoff state and disenables the return means to return the shutoff means (39) to the supply state;
**characterized in that**:
when the pressure measuring means (32) has detected a decrease in the fluid pressure, then the vibration detecting means (50) has detected the vibration within a first predetermined time, and then the pressure measuring means (32) has detected that the fluid pressure has been restored to a level before the decrease of the fluid pressure within a second predetermined time, the control means (33) causes the shutoff means (39) to switch to the shutoff state and disenables the return means (38) to return the shutoff means (39) to the supply state.

2. The fluid shutoff device (30) according to claim 1,
wherein when a predetermined operation has been performed with respect to the fluid shutoff device (30) when the fluid shutoff device (30) is installed, then the vibration detecting means (50) has detected the vibration, and then the pressure measuring means (32) has detected a decrease in the fluid pressure within a predetermined time, the control means (33) causes the shutoff means (39) to switch to the shutoff state and disenables the return means (38) to return the shutoff means (39) to the supply state.

3. The fluid shutoff device (30) according to claim 1,
wherein when the pressure measuring means (32) has detected a decrease in the fluid pressure, and then the vibration detecting means (50) has detected the vibration within the predetermined time, the control means (33) causes the shutoff means (39) to switch to the shutoff state and disenables the return means (38) to return the shutoff means (39) to the supply state.

4. A fluid shutoff device (30) comprising:
a shutoff means (39) coupled to a fluid supply pipe and configured to switch from a supply state in which a fluid flows through the fluid supply pipe (31) to a shutoff state in which the fluid is shutoff;
a control means (33) for controlling at least the shutoff means;
a flow measuring means (35) for measuring a flow rate of the fluid;
a pressure measuring means (32) for measuring a pressure of the fluid;
a vibration detecting means (50) for detecting a vibration; and
a return means (38) for returning the shutoff means (39) from the shutoff state to the supply state;
wherein when the vibration detecting means (50) has detected the vibration within a preset predetermined time, and it has been detected that the pressure of the fluid measured by the pressure measuring means (32) has decreased to a value equal to or less than a predetermined pressure value within a preset predetermined time, the control means (33) causes the shutoff means (39) to switch to the shutoff state and disenables the return means to return the shutoff means (39) to the supply state;
**characterized in that**:
when the vibration detecting means (50) has detected the vibration, then the pressure measuring means (32) has detected a decrease in the fluid pressure within a first predetermined time, then the vibration detecting means (50) has detected the vibration, and then the pressure measuring means (32) has detected that the fluid pressure has been restored to a level before the decrease of the fluid pressure within a second predetermined time, the control means (33) causes the shutoff means (39) to switch to the shutoff state and disenables the return means (38) to return the shutoff means (39) to the supply state.

5. The fluid shutoff device (30) according to any one of claims 1 to 4, further comprising:
an outside communication means (34) capable of communication with outside;
wherein the control means (33) causes the outside communication means (34) to communicate to outside, at a timing of at least one of a time point after the shutoff means (39) has been switched to the shutoff state, and a time point when a predetermined operation has been performed with respect to the fluid shutoff device (30) when the fluid shutoff device (30) is installed.

6. The fluid shutoff device (30) according to claim 5,
wherein the control means (33) causes the outside communication means (34) to communicate to outside information indicating that installation of the fluid shutoff device (30) is completed when the predetermined operation has been performed with respect to the fluid shutoff device (30) when the fluid shutoff device (30) is installed.

7. The fluid shutoff device (30) according to claim 5,
wherein the control means (33) causes the outside communication means (34) to communicate to outside information indicating that a gas is shut off, after the shutoff means (39) has been switched to the shutoff state.

8. The fluid shutoff device (30) according to claim 5,
wherein when a predetermined operation has been performed with respect to the fluid shutoff device (30) after the shutoff means (39) has been switched to the shutoff state, the control means (33) causes the outside communication means (34) to transmit a response request to outside, and permits the shutoff means (39) to be returned to the supply state upon reception of the response from outside.

9. The fluid shutoff device (30) according to any one of claims 1 to 4,
wherein when a predetermined operation has been performed with respect to the fluid shutoff device (30) after the shutoff means (39) has been switched to the shutoff state, the control means (33) permits the shutoff means (39) to be returned to the supply state.

10. The fluid shutoff device (30) according to any one of claims 1 to 4, further comprising:
a card processing means (37) which writes and reads information to and from a card-type storage medium in a state in which the card-type storage medium is inserted into the card processing means (37);
wherein after the card-type storage medium is inserted into the card processing means (37) and information is read from the card-type storage medium when the fluid shutoff device (30) is installed, the control means (33) activates causing of the shutoff means (39) to switch to the shutoff state and disenabling of the return means (38) to return the shutoff means (39) to the supply state.

11. The fluid shutoff device (30) according to claim 10,
wherein when the card-type storage medium is inserted into the card processing means (37) and information is read from the card-type storage medium after the shutoff means (39) has been switched to the shutoff state, the control means (33) enables the return means (38) to return the shutoff means (39) to the supply state.

12. The fluid shutoff device (30) according to claim 10, further comprising:
an outside communication means (34) capable of communication with outside;
wherein when the card-type storage medium is inserted into the card processing means (37) and information is read from the card-type storage medium after the shutoff means (39) has been switched to the shutoff state, the control means (33) causes the outside communication means (34) to transmit a response request to outside, and permits the shutoff means (39) to be returned to the supply state upon reception of the response from outside.

13. A computer program for causing a computer to execute a control method of the control means (33) included in the fluid shutoff device (30) according to any one of claims 1 to 12.

14. A computer-readable storage medium containing the computer program as recited in claim 13.

## Patentansprüche

1. Fluidabsperrvorrichtung (30), die umfasst:
eine Absperreinrichtung (39), die mit einer Fluidzufuhrleitung gekoppelt und konfiguriert ist, um von einem Zufuhrzustand, in dem ein Fluid durch die Fluidzufuhrleitung (31) strömt, in einen Absperrzustand umzuschalten, in dem das Fluid abgesperrt ist;
eine Steuerungseinrichtung (33) zum Steuern von wenigstens der Absperreinrichtung;
eine Strömungsmesseinrichtung (35) zum Messen einer Strömungsrate des Fluids;
eine Druckmesseinrichtung (32) zum Messen eines Drucks des Fluids;
eine Vibrationserfassungseinrichtung (50) zum Erfassen einer Vibration und
eine Rückführeinrichtung (38) zum Zurückführen der Absperreinrichtung (39) von dem Absperrzustand in den Zufuhrzustand;
wobei, wenn die Vibrationserfassungseinrichtung (50) die Vibration innerhalb einer voreingestellten vorgegebenen Zeit erfasst hat und festgestellt wurde, dass der durch die Druckmesseinrichtung (32) gemessene Druck des Fluids auf einen Wert gleich oder kleiner als ein vorgegebener Druckwert innerhalb einer voreingestellten vorgegebenen Zeit gesunken ist, die Steuerungseinrichtung (33) die Absperreinrichtung (39) veranlasst, in den Absperrzustand umzuschalten, und die Rückführeinrichtung deaktiviert, um die Absperreinrichtung (39) in den Zufuhrzustand zurückzuführen;
**dadurch gekennzeichnet, dass,**
wenn die Druckmesseinrichtung (32) ein Absinken des Fluiddrucks festgestellt hat, dann die Vibrationserfassungseinrichtung (50) die Vibration innerhalb einer ersten vorgegebenen Zeit erfasst hat und dann die Druckmesseinrichtung (32) festgestellt hat, dass der Fluidddruck auf ein Niveau vor dem Absinken des Fluiddrucks innerhalb einer zweiten vorgegebenen Zeit wiederhergestellt wurde, die Steuerungseinrichtung (33) die Absperreinrichtung (39) veranlasst, in den Absperrzustand umzuschalten, und die Rückführeinrichtung (38) deaktiviert, um die Absperreinrichtung (39) in den Zufuhrzustand zurückzuführen.

2. Fluidabsperrvorrichtung (30) nach Anspruch 1,
wobei, wenn eine vorgegebene Operation mit Bezug auf die Fluidabsperrvorrichtung (30) durchgeführt worden ist, wenn die Fluidabsperrvorrichtung (30) installiert ist, dann die Vibrationserfassungseinrichtung (50) die Vibration erfasst hat und daraufhin die Druckmesseinrichtung (32) ein Absinken des Fluiddrucks in einer vorgegebenen Zeit festgestellt hat, die Steuerungseinrichtung (33) die Absperreinrichtung (39) veranlasst, in den Sperrzustand umzuschalten, und die Rückführeinrichtung (38) deaktiviert, um die Absperreinrichtung (39) in den Zufuhrzustand zurückzuführen.

3. Fluidabsperrvorrichtung nach Anspruch 1,
wobei, wenn die Druckmesseinrichtung (32) ein Absinken des Fluiddrucks festgestellt hat und dann die Vibrationserfassungseinrichtung (50) die Vibration innerhalb der vorgegebenen Zeit erfasst hat, die Steuerungseinrichtung (33) die Absperreinrichtung (39) veranlasst, in den Absperrzustand umzuschalten, und die Rückführeinrichtung (38) deaktiviert, um die Absperreinrichtung (39) in den Zufuhrzustand zurückzuführen.

4. Fluidabsperrvorrichtung (30), die umfasst:
eine Absperreinrichtung (39), die mit einer Fluidzufuhrleitung gekoppelt und konfiguriert ist, um von einem Zufuhrzustand, in dem ein Fluid durch die Fluidzufuhrleitung (31) strömt, in einen Absperrzustand umzuschalten, in dem das Fluid abgesperrt ist;
eine Steuerungseinrichtung (33) zum Steuern von wenigstens der Absperreinrichtung;
eine Strömungsmesseinrichtung (35) zum Messen einer Strömungsrate des Fluids;
eine Druckmesseinrichtung (32) zum Messen eines Drucks des Fluids;
eine Vibrationserfassungseinrichtung (50) zum Erfassen einer Vibration und
eine Rückführeinrichtung (38) zum Zurückführen der Absperreinrichtung (39) von dem Absperrzustand in den Zufuhrzustand;
wobei, wenn die Vibrationserfassungseinrichtung (50) die Vibration innerhalb einer voreingestellten vorgegebenen Zeit erfasst hat und festgestellt wurde, dass der durch die Druckmesseinrichtung (32) gemessene Druck des Fluids auf einen Wert gleich oder kleiner als ein vorgegebener Druckwert innerhalb einer voreingestellten vorgegebenen Zeit gesunken ist, die Steuerungseinrichtung (33) die Absperreinrichtung (39) veranlasst, in den Absperrzustand umzuschalten, und die Rückführeinrichtung deaktiviert, um die Absperreinrichtung (39) in den Zufuhrzustand zurückzuführen;
**dadurch gekennzeichnet, dass,**
wenn die Vibrationserfassungseinrichtung (50) die Vibration erfasst hat, dann die Druckmesseinrichtung (32) ein Absinken des Fluiddrucks innerhalb einer ersten vorgegebenen Zeit festgestellt hat, dann die Vibrationserfassungseinrichtung (50) die Vibration erfasst hat und dann die Druckmesseinrichtung (32) festgestellt hat, dass der Fluidddruck auf ein Niveau vor dem Absinken des Fluiddrucks innerhalb einer zweiten vorgegebenen Zeit wiederhergestellt wurde, die Steuerungseinrichtung (33) die Absperreinrichtung (39) veranlasst, in den Absperrzustand umzuschalten, und die Rückführeinrichtung (38) deaktiviert, um die Absperreinrichtung (39) in den Zufuhrzustand zurückzuführen.

5. Fluidabsperrvorrichtung nach einem der Ansprüche 1 bis 4, die des Weiteren umfasst:
eine Außenbereichskommunikationseinrichtung (34), die mit dem Außenbereich kommunizieren kann;
wobei die Steuerungseinrichtung (33) die Außenbereichskommunikationseinrichtung (34) veranlasst, mit dem Außenbereich zu einer Zeit von wenigstens einem Zeitpunkt, nachdem die Absperreinrichtung (39) in den Absperrzustand umgeschaltet wurde, oder einem Zeitpunkt zu kommunizieren, zu dem eine vorgegebene Operation mit Bezug auf die Fluidabsperrvorrichtung (30) durchgeführt wurde, wenn die Fluidabsperrvorrichtung (30) installiert ist.

6. Fluidabsperrvorrichtung (30) nach Anspruch 5,
wobei die Steuerungseinrichtung (33) die Außenbereichskommunikationseinrichtung (34) veranlasst, in den Außenbereich Informationen zu kommunizieren, die anzeigen, dass die Installation der Fluidabsperrvorrichtung (30) abgeschlossen ist, wenn die vorgegebene Operation mit Bezug auf die Fluidabsperrvorrichtung (30) durchgeführt wurde, wenn die Fluidabsperrvorrichtung (30) installiert ist.

7. Fluidabsperrvorrichtung (30) nach Anspruch 5,
wobei die Steuerungseinrichtung (33) die Außenbereichskommunikationseinrichtung (34) veranlasst, in den Außenbereich Informationen zu kommunizieren, die anzeigen, dass ein Gas abgesperrt ist, nachdem die Absperreinrichtung (39) in den Absperrzustand umgeschaltet worden ist.

8. Fluidabsperrvorrichtung (30) nach Anspruch 5,
wobei, wenn eine vorgegebene Operation mit Bezug auf die Fluidabsperrvorrichtung (30) durchgeführt worden ist, nachdem die Absperreinrichtung (39) in den Absperrzustand umgeschaltet worden ist, die Steuerungseinrichtung (33) die Außenbereichskommunikationseinrichtung (34) veranlasst, eine Antwortanforderung an den Außenbereich zu senden, und zulässt, dass die Absperreinrichtung (39) beim Empfang der Antwort vom Außenbereich in den Zufuhrzustand zurückgeführt wird.

9. Fluidabsperrvorrichtung (30) nach einem der Ansprüche 1 bis 4,
wobei, wenn eine vorgegebene Operation mit Bezug auf die Fluidabsperrvorrichtung (30) durchgeführt worden ist, nachdem die Absperreinrichtung (39) in den Absperrzustand umgeschaltet worden ist, die Steuerungseinrichtung (33) zulässt, dass die Absperreinrichtung (39) in den Zufuhrzustand zurückgeführt wird.

10. Fluidabsperrvorrichtung (30) nach einem der Ansprüche 1 bis 4, die des Weiteren umfasst:
eine Kartenverarbeitungseinrichtung (37), die Informationen in ein Kartenspeichermedium schreibt und von diesem in einem Zustand ausliest, in dem das Kartenspeichermedium in die Kartenverarbeitungseinrichtung (37) eingesetzt ist;
wobei, nachdem das Kartenspeichermedium in die Kartenverarbeitungseinrichtung (37) eingesetzt worden ist und Informationen aus dem Kartenspeichermedium ausgelesen werden, wenn die Fluidabsperrvorrichtung (30) installiert ist, die Steuerungseinrichtung (33) das Bewirken der Absperreinrichtung (39) aktiviert, in den Absperrzustand zu schalten, und die Rückführeinrichtung (38) deaktiviert, um die Absperreinrichtung (39) in den Zufuhrzustand zurückzuführen.

11. Fluidabsperrvorrichtung (30) nach Anspruch 10,
wobei, wenn das Kartenspeichermedium in die Kartenverarbeitungseinrichtung (37) eingesetzt wird und Informationen aus dem Kartenspeichermedium ausgelesen werden, nachdem die Absperreinrichtung (39) in den Absperrzustand umgeschaltet worden ist, die Steuerungseinrichtung (33) die Rückführeinrichtung (38) aktiviert, um die Rückführeinrichtung (38) in den Zufuhrzustand zurückzuführen.

12. Fluidabsperrvorrichtung (30) nach Anspruch 10, die des Weiteren umfasst:
eine Außenbereichskommunikationseinrichtung (34), die mit dem Außenbereich kommunizieren kann;
wobei, wenn das Kartenspeichermedium in die Kartenverarbeitungseinrichtung (37) eingesetzt wird und Informationen aus dem Kartenspeichermedium ausgelesen werden, nachdem die Absperreinrichtung (39) in den Absperrzustand umgeschaltet worden ist, die Steuerungseinrichtung (33) die Außenbereichskommunikationseinrichtung (34) veranlasst, eine Antwortanfrage an den Außenbereich zu senden, und zulässt, dass die Absperreinrichtung (39) beim Empfang der Antwort vom Außenbereich in den Zufuhrzustand zurückgeführt wird.

13. Computerprogramm zum Bewirken, dass ein Computer ein Steuerungsverfahren der Steuerungseinrichtung (33) ausführt, das in der Fluidabsperrvorrichtung (30) nach einem der Ansprüche 1 bis 12 enthalten ist.

14. Computerlesbares Speichermedium, das das Computerprogramm nach Anspruch 13 enthält.

## Revendications

1. Dispositif d'arrêt de fluide (30) comprenant :
un moyen d'arrêt (39) couplé à un tuyau d'alimentation en fluide et conçu pour commuter d'un état d'alimentation dans lequel un fluide s'écoule à travers le tuyau d'alimentation en fluide (31) à un état dans lequel le fluide est arrêté ;
un moyen de commande (33) destiné à commander au moins le moyen d'arrêt ;
un moyen de mesure d'écoulement (35) destiné à mesurer une vitesse d'écoulement du fluide ;
un moyen de mesure de pression (32) destiné à mesurer une pression du fluide ;
un moyen de détection de vibration (50) destiné à détecter une vibration ; et
un moyen de rappel (38) destiné à ramener le moyen d'arrêt (39) de l'état d'arrêt à l'état d'alimentation ;
dans lequel lorsque le moyen de détection de vibration (50) a détecté la vibration dans un délai prédéterminé fixé au préalable, et l'on a détecté que la pression du fluide mesurée par le moyen de mesure de pression (32) a augmenté jusqu'à une valeur égale ou inférieure à une valeur de pression prédéterminée dans un délai prédéterminé fixé au préalable, le moyen de commande (33) amène le moyen d'arrêt (39) à commuter vers l'état d'arrêt et désactive le moyen de rappel pour ramener le moyen d'arrêt (39) à l'état d'alimentation ;
**caractérisé en ce que** :
lorsque le moyen de mesure de pression (32) a détecté une augmentation de la pression de fluide, puis le moyen de détection de vibration (50) a détecté la vibration dans un premier délai prédéterminé, et puis le moyen de mesure de pression (32) a détecté que la pression du fluide a été ramenée à un niveau avant la diminution de la pression du fluide dans un deuxième délai prédéterminé, le moyen de commande (33) amène le moyen d'arrêt (39) à commuter vers l'état d'arrêt et empêche le moyen de rappel (38) de ramener le moyen d'arrêt (39) à l'état d'alimentation.

2. Dispositif d'arrêt de fluide (30) selon la revendication 1,
dans lequel lorsqu'une opération prédéterminée a été effectuée par rapport au dispositif d'arrêt de fluide (30) lorsque le dispositif d'arrêt de fluide (30) est installé, puis le moyen de détection de vibration (50) a détecté la vibration, et puis le moyen de mesure de pression (32) a détecté une augmentation de la pression de fluide dans un délai prédéterminé, le moyen de commande (33) amène le moyen d'arrêt (39) à commuter vers l'état d'arrêt et empêche le moyen de rappel (38) de ramener le moyen d'arrêt (39) à l'état d'alimentation.

3. Dispositif d'arrêt de fluide (30) selon la revendication 1,
dans lequel lorsque le moyen de mesure de pression (32) a détecté une augmentation de la pression de fluide, et puis le moyen de détection de vibration (50) a détecté la vibration dans un premier délai prédéterminé, le moyen de commande (33) amène le moyen d'arrêt (39) à commuter vers l'état d'arrêt et empêche le moyen de rappel (38) de ramener le moyen d'arrêt (39) à l'état d'alimentation.

4. Dispositif d'arrêt de fluide (30) comprenant :
un moyen d'arrêt (39) couplé à un tuyau d'alimentation en fluide et conçu pour commuter d'un état d'alimentation dans lequel un fluide s'écoule à travers le tuyau d'alimentation en fluide (31) à un état d'arrêt dans lequel le fluide est arrêté ;
un moyen de commande (33) destiné à commander au moins le moyen d'arrêt ;
un moyen de mesure d'écoulement (35) destiné à mesurer une vitesse d'écoulement du fluide ;
un moyen de mesure de pression (32) destiné à mesurer une pression du fluide ;
un moyen de détection de vibration (50) destiné à détecter une vibration ; et
un moyen de rappel (38) destiné à ramener le moyen d'arrêt (39) de l'état d'arrêt à l'état d'alimentation ;
dans lequel lorsque le moyen de détection de vibration (50) a détecté la vibration dans un délai prédéterminé fixé au préalable, et l'on a détecté que la pression du fluide mesurée par le moyen de mesure de pression (32) a augmenté jusqu'à une valeur égale ou inférieure à une valeur de pression prédéterminée dans un délai prédéterminé fixé au préalable, le moyen de commande (33) amène le moyen d'arrêt (39) à commuter vers l'état d'arrêt et empêche le moyen de rappel de ramener le moyen d'arrêt (39) à l'état d'alimentation ;
**caractérisé en ce que** :
lorsque le moyen de détection de vibration (50) a détecté la vibration, puis le moyen de mesure de pression (32) a détecté une augmentation de la pression du fluide dans un premier délai prédéterminé, puis le moyen de détection de vibration (50) a détecté la vibration, et puis le moyen de mesure de pression (32) a détecté que la pression du fluide a été ramenée à un niveau avant la diminution de la pression du fluide dans un deuxième délai prédéterminé, le moyen de commande (33) amène le moyen d'arrêt (39) à commuter vers l'état d'arrêt et empêche le moyen de rappel (38) de ramener le moyen d'arrêt (39) à l'état d'alimentation.

5. Dispositif de d'arrêt de fluide (30) selon l'une quelconque des revendications 1 à 4, comprenant en outre :
un moyen de communication externe (34) capable de communiquer avec l'extérieur ; dans lequel le moyen de commande (33) amène le moyen de communication externe (34) à communiquer avec l'extérieur, à un moment correspondant à un instant après que le moyen d'arrêt (39) a été commuté vers l'état d'arrêt et/ou un instant où une opération prédéterminée a été effectuée par rapport au dispositif d'arrêt de fluide (30) lorsque le dispositif d'arrêt de fluide (30) est installé.

6. Dispositif d'arrêt de fluide (30) selon la revendication 5,
dans lequel le moyen de commande (33) amène le moyen de communication externe (34) à communiquer avec des informations externes indiquant que l'installation du dispositif d'arrêt de fluide (30) est terminée lorsque l'opération prédéterminée a été effectuée par rapport au dispositif d'arrêt de fluide (30) lorsque le dispositif d'arrêt de fluide (30) est installé.

7. Dispositif d'arrêt de fluide (30) selon la revendication 5,
dans lequel le moyen de commande (33) amène le moyen de communication externe (34) à communiquer avec des informations externes indiquant que le gaz est arrêté, après que le moyen d'arrêt (39) a été commuté vers l'état d'arrêt.

8. Dispositif d'arrêt de fluide (30) selon la revendication 5,
dans lequel lorsqu'une opération prédéterminée a été effectuée par rapport au dispositif d'arrêt de fluide (30) après que le moyen d'arrêt (39) a été commuté vers l'état d'arrêt, le moyen de commande (33) amène le moyen de communication externe (34) à transmettre une demande de réponse à l'extérieur et permet au moyen d'arrêt (39) d'être ramené à l'état d'alimentation lors de la réception de la réponse depuis l'extérieur.

9. Dispositif de d'arrêt de fluide (30) selon l'une quelconque des revendications 1 à 4
dans lequel lorsqu'une opération prédéterminée a été effectuée par rapport au dispositif d'arrêt de fluide (30) après que le moyen d'arrêt (39) a été commuté vers l'état d'arrêt, le moyen de commande (33) permet au moyen d'arrêt (39) d'être ramené à l'état d'alimentation.

10. Dispositif d'arrêt de fluide (30) selon l'une quelconque des revendications 1 à 4, comprenant en outre : un moyen de traitement de carte (37) qui écrit et lit des informations vers et à partir d'un support de stockage du type carte dans un état dans lequel le support de stockage du type carte est inséré dans le moyen de traitement de carte (37) ;
dans lequel après que le support de stockage du type carte est inséré dans le moyen de traitement de carte (37) et des informations sont lues depuis le support de stockage du type carte lorsque le dispositif d'arrêt de fluide (30) est installé, le moyen de commande (33) active le fait d'amener le moyen d'arrêt (39) à commuter vers l'état d'arrêt et d'empêcher le moyen de rappel (38) de ramener le moyen d'arrêt (39) à l'état d'alimentation.

11. Dispositif d'arrêt de fluide (30) selon la revendication 10,
dans lequel lorsque le support de stockage du type carte est inséré dans le moyen de traitement de carte (37) et des informations sont lues depuis le support de stockage du type carte après que le moyen d'arrêt (39) a été commuté vers l'état d'arrêt, le moyen de commande (33) permet au moyen de rappel (38) de ramener le moyen d'arrêt (39) à l'état d'alimentation.

12. Dispositif d'arrêt de fluide (30) selon la revendication 10, comprenant en outre :
un moyen de communication externe (34) capable de communiquer avec l'extérieur ;
dans lequel lorsque le support de stockage du type carte est inséré dans le moyen de traitement de carte (37) et des informations sont lues depuis le support de stockage du type carte après que le moyen d'arrêt (39) a été commuté vers l'état d'arrêt, le moyen de commande (33) amène le moyen de communication externe (34) à transmettre une demande de réponse à l'extérieur et permet au moyen d'arrêt (39) d'être ramené à l'état d'alimentation lors de la réception de la réponse depuis l'extérieur.

13. Programme informatique destiné à amener un ordinateur à effectuer un procédé de commande du moyen de commande (33) compris dans le dispositif d'arrêt de fluide (30) selon l'une quelconque des revendications 1 à 12.

14. Support de stockage lisible par ordinateur contenant le programme informatique tel que défini dans la revendication 13.
